# EUROPÄISCHE PATENTSCHRIFT

(11) **EP 2 556 726 B1**
(45) Veröffentlichungstag und Bekanntmachung des Hinweises auf die Patenterteilung: **13.09.2017**
(21) Anmeldenummer: 11713787.7
(22) Anmeldetag: 11.04.2011
(51) Int. Cl.: H02J 9/06, H02J 9/02, H05B 33/08, H05B 37/02

(54) **MODULARES LED-BELEUCHTUNGSSYSTEM MIT NOTLICHTFUNKTION**
MODULAR LED LIGHTING SYSTEM HAVING EMERGENCY LIGHT FUNCTION
SYSTÈME D'ÉCLAIRAGE À DEL MODULAIRE, À FONCTION D'ÉCLAIRAGE D'URGENCE

(30) Priorität: 09.04.2010 DE 102010003797
(43) Veröffentlichungstag der Anmeldung: 13.02.2013
(73) Patentinhaber: Tridonic AG, 8755 Ennenda (CH); Tridonic UK Limited, Hampshire RG24 8LB (GB)
(72) Erfinder: ZIMMERMANN, Michael, CH-8888 Heiligkreuz (CH); KELLER, Ueli, CH-8738 Uetliburg (CH); WILSON, Ian, Sunderland Tyne and Wear SR33RH (GB)
(74) Vertreter: Rupp, Christian
(86) Internationale Anmeldenummer: PCT/EP2011/055634
(87) Internationale Veröffentlichungsnummer: WO 2011/124723

(56) Entgegenhaltungen:
- EP-A1- 1 555 859
- WO-A1-2008/151800
- DE-A1-102006 030 655
- DE-U1-202008 002 883

## Beschreibung

Die vorliegende Erfindung bezieht sich ganz allgemein auf den Betrieb von LEDs, wobei darunter anorganische LEDs wie auch organische LEDs (OLEDs) zu verstehen sind. Insbesondere bezieht sich die Erfindung auf eine Notlichtfunktion, die dann zum Einsatz kommt, wenn eine externe Stromversorgung für die LEDs unterbrochen wird. Grundsätzlich ist es bereits bekannt, eine LED-Strecke, die eine oder mehrere in Serie geschaltete LEDs aufweisen kann, ausgehend von einer Konstantstromquelle mit elektrischer Leistung zu versorgen. Es ist ebenfalls bekannt, zur Ausführung eines Dimmens eine PWM-Modulation zu verwenden, so dass in den Einschaltzeitdauern eines PWM-Impulszugs die genannte Konstantstromregelung durchgeführt wird. Beim Dimmen wird also dann das Tastverhältnis des PWM-Signals verändert.

Zur Bereitstellung der Versorgungsspannung der Konstantstromquelle kann beispielsweise eine aktiv getaktete PFC-Schaltung (Power Factor Correction Circuit) verwendet werden. So offenbart zum Beispiel die Gebrauchsmusterschrift DE 20 2008 002 883 U1. Schließlich sind auch noch weitere Anforderungen beim Betrieb von LEDs zu beachten, beispielsweise dass üblicherweise eine galvanische Trennung zwischen der LED-Strecke und der Versorgungspannung des PFCs, typischerweise eine Netzwechselspannung, gefordert wird.

Aus dem obigen ergibt sich, dass zu einem, ordnungsgemäßen und vorteilhaften Betrieb einer LED-Strecke funktional mehrere Schaltungsblöcke vorliegen müssen (PFC, galvanische Trennung, Konstantstromquelle etc.). Dies führt gegebenenfalls zu relativ komplexen Schaltungen.

Zum Betrieb einer LED-Beleuchtungsvorrichtung wird diese gewöhnlich an das vorhandene Stromnetz angeschlossen, wobei die oben genannten elektronischen Baueinheiten zur Stromanpassung darauf abgestimmt sind. Dies macht eine LED-Beleuchtungsvorrichtung zwar in dem Gebiet unbegrenzt einsetzbar, in dem das Stromnetz zur Verfügung steht, jedoch steht damit die grundsätzliche Funktionstüchtigkeit der LED-Beleuchtungsvorrichtung immer in Abhängigkeit des Stromnetzes. Bei einem Ausfall desselbigen ist also auch eine Beleuchtung unmöglich. Weiterhin ergibt sich in diesem Fall das Problem, dass sich die LED-Beleuchtungsvorrichtung nicht mehr steuern lässt. Moderne Beleuchtungssysteme verfügen über einen Kommunikationsbus, mittels dessen verschiedenste Informationen zwischen den einzelnen Lampen und einer zentralen Steuereinheit ausgetauscht werden können. Eine solche Kommunikation ist bei einem Stromausfall ebenfalls ausgeschlossen.

Die Erfindung macht nunmehr mehrere Ansätze, wie eine LED-Beleuchtungsvorrichtung bei einer Unterbrechung der Versorgungsspannung weiterhin funktionsfähig bleiben kann.

Diese Aufgabe wird gelöst durch die Merkmale des Anspruchs 1. Die abhängigen Ansprüche bilden den zentralen Gedanken der Erfindung in besonders vorteilhafter Weise weiter.

Die Erfindung sieht eine modulare LED-Beleuchtung vor, aufweisend ein erstes Modul, dem eine AC-Versorgungsspannung zuführbar ist, und das aufweist:
- ein zweites Untermodul, an dessen Ausgang eine galvanisch von der AC-Versorgungsspannung getrennte DC-Versorgungsspannung bereitgestellt wird, und
- eine Steuereinheit, weiterhin aufweisend ein zweites Modul, das eine mit der DC-Versorgungsspannung des ersten Moduls versorgtes weiteres Untermodul insbesondere eine getaktete Konstantstromquelle aufweist, die von einer Steuereinheit des zweiten Moduls gesteuert wird,
- ein LED-Modul, das wenigstens eine LED-Strecke aufweist und das von dem weiteren Untermodul insbesondere einer Konstantstromquelle versorgt wird, sowie
- eine Notlichtbetriebsschaltung, die mit einem wiederaufladbaren Energiespeicher verbunden ist und bei Ausfall der AC-Versorgungsspannung die Speisung der modularen LED-Beleuchtung übernimmt, wobei die Notlichtbetriebsschaltung eine Entladeschaltung aufweist, welche einen Buck-Boost-Konverter aufweist und welche zur Speisung aus dem wiederaufladbaren Energiespeicher im Notlichtfall dient.
Vorzugsweise enthält die Notlicht-Betriebsschaltung eine Ladeschaltung für den wiederaufladbaren Energiespeicher, wobei dieser bei Anlegen der AC-Versorgungsspannung nachgeladen wird. Die Ladeschaltung kann dabei beispielsweise einen sogenannten Flyback-Konverter aufweisen.

Die Ladeschaltung kann an ein zweites Untermodul (Isoliereinheit) gekoppelt sein, vorzugsweise mittels einer zusätzlichen Sekundärwicklung. Alternativ hierzu kann die Ladeschaltung auch zusätzlich im ersten Modul als Wandlerschaltung ausgeführt sein, welche isoliert ausgeführt ist und von der AC-Versorgungsspannung gespeist wird.

Die Notlicht-Betriebsschaltung kann bei Ausfall der AC-Versorgungsspannung die Speisung des zweiten Moduls (Lampenmanagementmodul) über die DC-Versorgungsspannung (elektrische Leistungsübertragung) übernehmen. Vorzugsweise wird auch die Speisung einer sekundärseitigen Niedervoltspannungsversorgung für das zweite Modul (Lampenmanagementmodul) übernommen.

Bei Ausfall der AC-Versorgungsspannung kann eine externe Kommunikation der modularen LED-Beleuchtung weiterhin aufrecht erhalten werden. Diese kann beispielsweise entsprechend dem DALI-Standard erfolgen.

Vorzugsweise stehen die integrierte Steuereinheit des ersten Moduls und die integrierte Steuereinheit des zweiten Moduls (Lampenmanagementmodul) in interner Datenkommunikation über eine Kommunikationsschnittstelle. Die interne Datenkommunikation ist insbesondere standardisiert, d. h. unabhängig von einer externen Bus-Kommunikation des ersten Moduls ausgeführt. Bei einem Ausfall der AC-Versorgungsspannung kann dann durch die Notlicht-Betriebsschaltung die interne Kommunikation zwischen dem ersten Modul und dem zweiten Modul (Lampenmanagementmodul) weiterhin aufrecht erhalten werden.

Vorzugsweise versorgt die Notlicht-Betriebsschaltung das zweite Modul (Lampenmanagementmodul) bei Ausfall der AC-Versorgungsspannung mit einem von der normalen DC-Versorgungsspannung des ersten Moduls abweichenden Spannungspegel. Dies wird durch das zweite Modul (Lampenmanagementmodul) erkannt, welches daraufhin den Betrieb des LED-Moduls verändert. Hierbei kann insbesondere vorgesehen sein, dass das zweite Modul (Lampenmanagementmodul) auf einen Nothelligkeitswert und/oder eine besondere Notlichtfarbe umschaltet, wenn das zweite Modul (Lampenmanagementmodul) keine Steuersignale von dem ersten Modul empfängt.

Die Notlicht-Betriebsschaltung weist eine Entladeschaltung auf, welche einen Buck-Boost-Konverter aufweist und welche zur Speisung aus dem wiederaufladbaren Energiespeicher im Notlichtfall dient. Die Entladeschaltung kann dabei Bestandteil des ersten Moduls und zusätzlich zum zweiten Untermodul (Isoliereinheit) ausgebildet sein oder an das zweite Untermodul (Isoliereinheit) gekoppelt sein.

Der wiederaufladbare Energiespeicher kann beispielsweise eine wiederaufladbare Batterie und/oder einen Kondensator, beispielsweise einen sog. "Gold-Cap" aufweisen. Gegebenenfalls kann durch die Notlicht-Betriebsschaltung auch bei einem Ausfall der AC-Versorgungsspannung der Betrieb der LED-Beleuchtung vollumfassend aufrecht erhalten werden. Insbesondere kann nach wie vor ein Dimmen oder eine Farbveränderung durchgeführt werden.

Weitere Vorteile, Merkmale und Eigenschaften der Erfindung werden aus der folgenden Beschreibung bevorzugter Ausführungsbeispiele und unter Bezugnahme auf die beigefügten Figuren ersichtlich werden.
- Fig. 1: zeigt den modularen Aufbau eines modularen LED-Beleuchtungssystems mit einer erfindungsgemässen Notlichtbetriebsschaltung.
- Fig. 2: zeigt ein Ausführungsbeispiel für einen isolierten Wandler, in Form eines Wechselrichters mit folgendem Resonanzkreis und Transformator, wobei ferner eine zweite Variante einer erfindungsgemässen Notlichtbetriebsschaltung gezeigt ist.
- Fig. 3: zeigt schematisch weitere Steuermodi für den Wandler von Figur 4.
- Fig. 4: zeigt die Kommunikation zwischen einer Mastereinheit und mehreren Slave-Einheiten des modularen LED-Beleuchtungssystems.
- Fig. 5: zeigt die Erzeugung einer DC-Niedervoltspannung.
- Fig. 6a und 6b: zeigen das LED-Modul mit mehreren voneinander unabhängigen steuerbaren Kanälen.

### Allgemeiner Aufbau des modularen Schaltungskonzepts:

Es soll nunmehr der allgemeine Aufbau des modularen Schaltungskonzepts für eine LED-basierte Beleuchtung, beispielsweise für ein sogenanntes 'Downlight' (FET) erläutert werden. Im Anschluss hieran wird die Ausgestaltung und Funktion der Notlichtbetriebsschaltung detailliert erläutert werden. Es soll dabei vorweg genommen werden, dass die Erfindung keineswegs auf die Anwendung von LEDs oder OLEDs als Leuchtmittel begrenzt ist. Es können vielmehr auch andere Leuchtmittel eingesetzt werden, wie beispielsweise Gasentladungslampen.

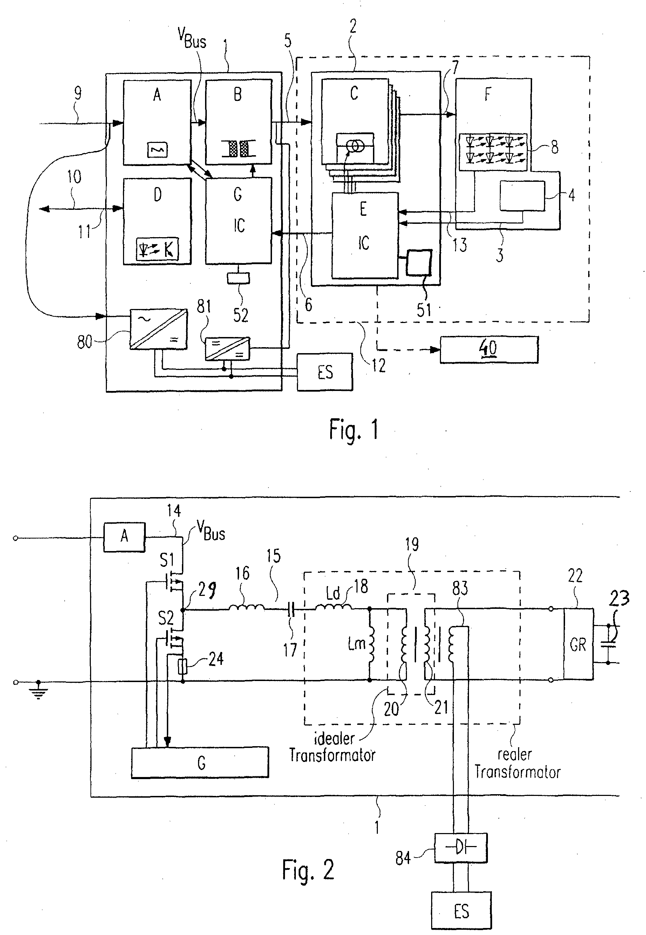

Wie in Figur 1 ersichtlich, weist das erfindungsgemäße modulare Schaltungskonzept ein erstes Modul 1 auf, das vorzugsweise mit Wechselspannung, insbesondere Netz-Wechselspannung 9 versorgt ist. Diese Netz-Wechselspannung 9 wird einem ersten Untermodul A zugeführt, das typischerweise eine Gleichrichtung der zugeführten Wechselspannung ausführt, wobei dann die gleichgerichtete Wechselspannung einer aktiv getakteten PFC (Power Factor Correction)-Schaltung des Untermoduls A zugeführt wird. Die Ausgangsspannung der PFC-Schaltung ist eine DC-Spannung, im Folgenden 'Busspannung V_{Bus}' genannt, die einem weiteren Untermodul B des Moduls 1 zugeführt wird. Das Untermodul B weist im Wesentlichen die Funktion einer galvanischen Trennung (Isolierung) auf und kann dazu beispielsweise als galvanisches Trennelement einen Transformator aufweisen. Zusätzlich dient das zweite Untermodul B zur Bereitstellung einer stabilisierten Gleichspannung, der DC-Versorgungsspannung 5.

Mit der Steuereinheit G ist eine Steuerschaltung des Moduls 1 bezeichnet, die insbesondere als integrierte Schaltung, wie beispielsweise ASIC oder Mikroprozessor bzw. Hybrid davon implementiert sein kann. Wie schematisch in Figur 1 gezeigt, steuert diese Steuereinheit G aktive Schaltelemente des Untermoduls B an, die beispielsweise in Form einer Halbbrücke (beispielsweise eines Halbbrückentreibers und zweier Schalter in Serie, siehe im Folgenden Fig. 2) ausgestaltet sein können, der eine den Transformator (19) des Untermoduls B zugeführte Wechselspannung erzeugt. Die Steuereinheit G kann über Programmiereingänge verfügen, wodurch eine Programmierung oder Kalibrierungsprogrammierung der Steuereinheit G möglich ist. Dafür können die Anschlüsse der Steuereinheit G auf die Platine des zweiten Untermoduls B herausgeführt werden, um eine Programmierung dieses Untermoduls B und somit der Steuereinheit G auch nach Auslieferung des Untermoduls B zu ermöglichen.

Mit dem Untermodul B des Moduls 1 ist eine galvanische Entkopplung bezeichnet, über die die Steuereinheit G des Moduls 1 mit einer Datenschnittstelle 11 kommuniziert. Diese Datenschnittstelle kann insbesondere zur Anbindung eines externen analogen oder digitalen Busses, beispielsweise gemäß dem DALI-Industriestandard ausgebildet sein. Alternativ oder zusätzlich können aber auch unidirektionale oder bidirektionale Signale an dieser Schnittstelle 11 gemäß anderen Standards übertragen werden. Weiterhin können an dieser Schnittstelle 11 alternativ oder zusätzlich Signale empfangen werden, die ausgehend von einem durch die Schnittstelle selbst 11 oder extern (beispielsweise ebenfalls über die Netzspannung 9) versorgten manuell zu betätigenden Taster oder Schalter erzeugt werden.

Die wesentlichen Funktionen des Moduls 1 sind somit die Bereitstellung (am Ausgang des Untermoduls B) einer DC-Spannung (durch Gleichrichtung der Ausgangsspannung des Transformators 19 des zweiten Untermoduls B mit dem Gleichrichter 22) ausgehend von einer zugeführten Netzspannung 9 sowie die externe Kommunikation über die Datenschnittstelle 11 bzw. Schnittstellenschaltung D. Vorzugsweise räumlich getrennt von dem genannten ersten Modul 1 ist ein zweites Modul 2 als Schaltungsmodul vorgesehen. Dieses zweite Modul 2 hat im Wesentlichen die Funktion des sogenannten 'Lampenmanagements', was bedeutet, dass dieses zweite Modul 2 einerseits die angeschlossenen Leuchtmittel (hier die LED-Strecke 8 mit einer oder mehreren LEDs) mit Konstantstrom versorgt und andererseits Rückführgrößen (schematisch mit 13 bezeichnet) aus dem Bereich der LED-Strecke 8 erhält.

Die DC-Versorgungsspannung 5 am Ausgang des zweiten Untermoduls B des ersten Moduls 1 wird also einem weiteren Untermodul C, als steuer-/regelbaren Konstantstromquelle, zugeführt. Dieses weitere Untermodul C versorgt also über einen Ausgang 7 die LED-Strecke mit Konstantstrom. Das zweite Modul 2 kann dabei mehrere Konverterstufen (mehrere weitere Untermodule C als Konstantstromquellen) enthalten, wobei diese Konverterstufen (weitere Untermodule C als Konstantstromquellen) jeweils voneinander getrennte (unabhängige) LED-Strecken 8 ansteuern können.

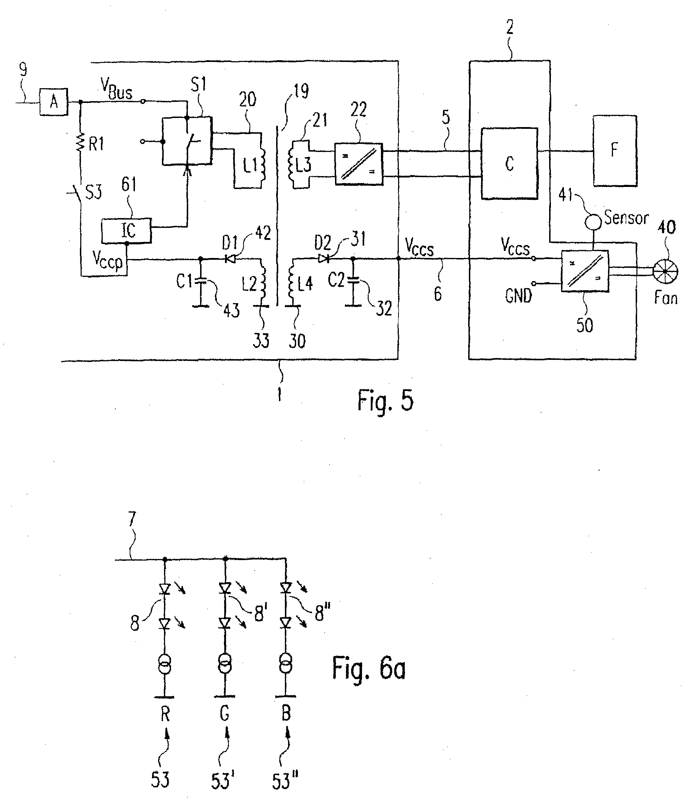

Das weitere Untermodul C kann sowohl als getaktete Konstantstromquelle (also beispielsweise als Tiefsetzsteller auch Buck-Konverter genannt oder isolierter Sperrwandler auch Flyback-Konverter genannt) oder als Linearregler (realisiert mit Transistoren oder integrierten Schaltkreisen) ausgeführt sein. Ein Beispiel für eine Ansteuerung mittels Linearregler ist schematisch in Figur 6a dargestellt.

Weiterhin weist das zweite Modul 2 eine eigene Steuereinheit E auf, die wiederum als Mikrocontroller, ASIC oder Hybrid davon ausgebildet sein kann. Diese Steuereinheit E des zweiten Moduls 2 enthält also Rückführgrößen 13 aus dem Bereich der LED-Strecke 8. Die Steuereinheit E steuert die eine oder mehreren weiteren Untermodule C im zweiten Modul 2 an. Dabei wird der Strom durch die LED-Strecke 8 geregelt, es können zum korrekten Betrieb der LEDs und zur Fehlererkennung aber auch weitere Rückführgrößen erfasst und überwacht werden wie beispielsweise die LED-Spannung oder die Temperatur.

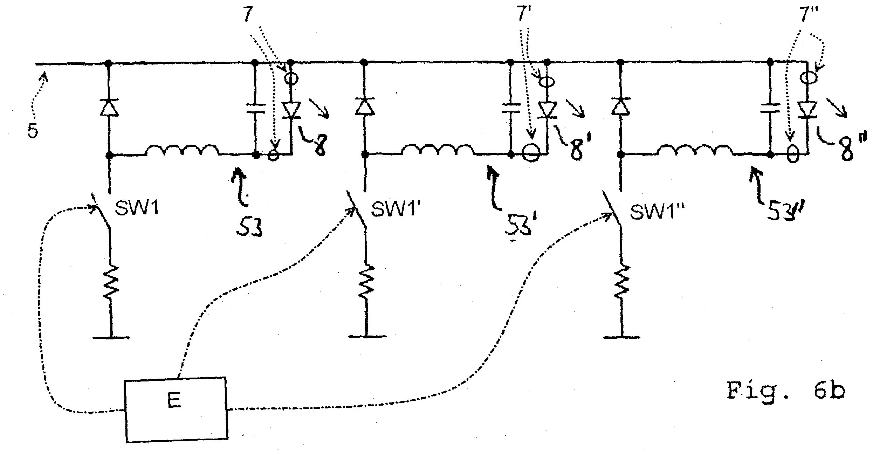

In einer bevorzugten Ausführungsform ist das weitere Untermodul C als getaktete Konstantstromquelle ausgeführt, wobei dieses Untermodul C zumindest einen aktiv getakteten Schalter SW1 als Teil der getakteten Konstantstromquelle aufweist. Ein Beispiel für eine Ansteuerung mittels getakteter Konstantstromquelle ist schematisch in Figur 6b dargestellt. In dieser schematischen Darstellung sind aus Gründen der Übersichtlichkeit keine Erfassungen von Rückführgrößen wie beispielsweise des LED-Stromes, der LED-Spannung oder des Stromes durch den Schalter SW1 dargestellt. Bei diesem Beispiel werden die LEDs der LED-Strecken 8, 8', 8" (die beispielsweise auf einem LED-Modul F angeordnet sind) durch jeweils einen Tiefsetzsteller als getaktete Konstantstromquelle über die Ausgänge 7, 7', 7" gespeist.

Der aktiv getaktete Schalter der getakteten Konstantstromquelle wird dabei direkt oder indirekt (beispielsweise über einen Treiberbaustein) durch die Steuereinheit E angesteuert. Der Einsatz einer getakteten Konstantstromquelle ermöglicht im Unterschied zu einem Linearregler einen flexiblen Betrieb von unterschiedlichen LED-Modulen F. Die getaktete Konstantstromquelle kann sowohl die Spannung als auch den Strom durch das LED-Modul F einstellen und anpassen. Die getaktete Konstantstromquelle stellt einen aktiv getakten DC-DC-Wandler dar, der die DC-Versorgungsspannung 5 aufnimmt und das LED-Modul F entsprechend mit dem gewünschten LED-Strom und / oder LED-Spannung speist, vorzugsweise durch eine Ansteuerung durch die Steuereinheit E aufgrund der dieser Steuereinheit E zugeführten Rückführgrößen.

Die getaktete Konstantstromquelle bietet weiterhin den Vorteil, dass der Betriebsmodus des Untermoduls C an die jeweilige aktuelle Betriebsart angepaßt werden kann. So kann die Art der Taktung der getakteten Konstantstromquelle angepasst werden, beispielsweise kann der Schalter SW1 mit einem frequenzmoduliertem, pulsweitenmodulierten oder einer Kombination von Frequenzmoduliertem und pulsweitenmodulierten Signal angesteuert werden. Die aktuelle Betriebsart kann sich beispielsweise für einen Betrieb bei hoher Helligkeit der LED-Strecke 8 und bei niedriger Helligkeit unterscheiden.

Wie bei dem Beispiel der Fig. 6b dargestellt, ist es möglich, dass mehrere getaktete Konstantstromquellen zur Speisung der LED-Strecken 8, 8', 8" über die Ausgänge 7, 7', 7" vorhanden sind. Vorzugsweise sind die Schalter SW1, SW1', SW1" der einzelnen getaktete Konstantstromquellen unabhängig voneinander durch die Steuereinheit E ansteuerbar. Somit wird ermöglicht, dass für jede LED-Strecken 8, 8', 8" jeweils die individuell erforderlichen LED-Ströme und LED-Spannungen über die Ausgänge 7, 7', 7" geliefert werden können. Dabei ist es auch möglich, dass jeweils eine separate Steuereinheit E, E', E" für jede der getakteten Konstantstromquellen mit den Schaltern SW1, SW1', SW1" vorhanden ist.

Wie bereits erwähnt, kann die Steuereinheit E zum korrekten Betrieb der LEDs und zur Fehlererkennung verschiedene Rückführgrößen erfassen (wie beispielsweise die LED-Spannung, den LED-Strom oder die Temperatur) und vorzugsweise bei Erfassung eines Fehlers die getaktete Konstantstromquelle in einen Fehlerbetriebsmodus umschalten. Dies kann beispielsweise durch einen Wechsel in einen Burst-Modus oder einen Betrieb mit geringer Einschaltzeit des Schalters SW1 erfolgen.

Darüber hinaus kann die Steuereinheit E über eine Kommunikationsschnittstelle 6, die zusätzlich zu der DC-Versorgungsspannung 5 ausgeführt ist, mit der Steuereinheit G des ersten Moduls 1 unidirektional oder bidirektional in Datenkommunikation stehen. Die Kommunikationsschnittstelle 6 kann auch zur Übertragung der Niedervoltversorgung genutzt werden (es erfolgt dann sowohl eine Datenkommunikation als auch eine Energieübertragung). Die Kommunikationsschnittstelle 6 kann auch in die DC-Versorgungsspannung 5 integriert sein, beispielsweise kann die Polarität der DC-Versorgungsspannung 5 umgeschaltet werden oder ein Trägersignal auf die DC-Versorgungsspannung 5 aufmoduliert werden.

Über die Kommunikationsschnittstelle 6 kann die Steuereinheit E auch beispielsweise im Falle einer Fehlererkennung mittels der bidirektionalen Datenkommunikation eine Fehlermeldung und vorzugsweise auch eine Information über die Art des Fehlers an die Steuereinheit G des ersten Moduls 1 übermitteln.

Wie in Figur 1 schematisch dargestellt, ist das zweite Modul 2, hier als Lampenmanagementmodul, vorzugsweise in einem gemeinsamen Gehäuse 12 mit dem eigentlichen LED-Modul F untergebracht.

Wie in Figur 1 schematisch dargestellt, kann das LED-Modul F einen eigenen Speicher 4, beispielsweise in Form eines Eproms aufweisen. Mit dem Bezugszweichen 3 ist schematisch bezeichnet, dass die Steuereinheit E des zweiten Moduls 2 auf diesen Speicher 4 des LED-Moduls F zugreifen kann.

Hinsichtlich des ersten Moduls ist darauf hinzuweisen, dass die PFC-Schaltung nur fakultativ ist.

Darüber hinaus ist darauf hinzuweisen, dass die dargestellten Funktionen der Untermodule A, B und C schaltungstechnisch auch integriert sein können, so dass, solange diese Funktionen grundsätzlich vorliegen, diese sich nicht in einem entsprechenden Aufbau der Schaltungstopologie widerspiegeln müssen.

Der Vorteil des modularen Aufbaus gemäß Fig. 1 ist es, beispielsweise dass das erste Modul 1 bzw. das zweite Modul 2 von unterschiedlichen Herstellern produziert werden können. Darüber hinaus können an ein erstes Modul 1 auch mehrere zweite Module 2 im Sinne eines Master/Slave-Betriebs angeschlossen werden. Bei einem Einsatz von getakteten Konstantstromquellen als Untermodul C wird somit ein zweistufiges System mit modularem Aufbau geschaffen, wobei mehrere zweite Module 2 an ein erstes Modul 1 angeschlossen werden können und auch ein Betrieb unterschiedlicher LED-Module F und / oder ein unterschiedlicher Betrieb gleicher LED-Module F abhängig von der über die Kommunikationsschnittstelle 6 erfolgenden Datenkommunikation wird ermöglicht.

Schließlich erlaubt der modulare Aufbau auch, dass die entsprechenden Untermodule und insbesondere das zweite Modul 2 unter Beibehaltung der übrigen Bestandteile austauschbar sind.

Wenn das zweite Modul 2 in einem gemeinsamen Gehäuse 12 mit dem eigentlichen LED-Modul F untergebracht ist, ergibt sich der Vorteil, dass diese Kombination aus zweitem Modul 2 und LED-Modul F in sich justiert werden kann, sodass beispielsweise deren Abstrahlungscharakteristik, Lichtmenge, Lichtfarbe und / oder Lichtlenkung parametrisiert und somit abgeglichen werden kann. Das erste Modul 1 und auch der Nutzer können somit über ein oder mehrere abgeglichene Systeme verfügen, die bei dann aber gleich ansteuern lassen und auch dementsprechend verhalten. Dieser interne Abgleich der Kombination aus zweitem Modul 2 und LED-Modul F kann beispielsweise über eine der folgenden Methoden erfolgen:
- Abgleich in der Fertigung oder bei der Inbetriebnahme
- ein geschlossenes Regelsystem innerhalb dieser Kombination (beispielsweise mittels eines internen Sensorsystems)
- Stützwerte
- Verfahren mit LED Charakterisierung
- oder eine Kombination aus den genannten Verfahren.

Die Kommunikation zwischen dem ersten Modul 1 und dem zweiten Modul 2 über die Kommunikationsschnittstelle 6 erfolgt dementsprechend vorzugsweise standardisiert.

Von außen beispielsweise über eine Busleitung des externen Busses 10 über die Datenschnittstelle 11 eingehende Befehle oder Abfragen werden wie dargestellt nur dem ersten Modul 1 zugeführt. Dies kann somit als externe Datenkommunikation bezeichnet werden, im Gegensatz zu der internen Datenkommunikation über die Kommunikationsschnittstelle 6 zwischen dem ersten Modul 1 und dem zweiten Modul 2.

Dies hat den Vorteil, dass zur Anpassung an unterschiedliche externe Busse 10 nur das erste Modul 1 anzupassen ist, während der Aufbau und das Datenprotokoll für das zweite Modul 2 davon unberührt bleibt.

Die Kommunikation über die interne Kommunikationsschnittstelle 6 ist somit auch standardisiert, da sie unabhängig von unterschiedlichen an das erste Modul 1 anlegbaren Busprotokollen oder Steuersignalen ist.

Die Kommunikation über die interne Kommunikationsschnittstelle 6 kombiniert mit dem modularen Aufbau des Systems ergibt den Vorteil, dass von dem zweiten Modul 2 die Betriebsdaten für die optimale Speisung des zweiten Moduls 2 übertragen werden können. Das zweite Modul 2 (vorzugsweise von der Steuereinheit E ausgehend) kann die erforderlichen Betriebsdaten über die interne Kommunikationsschnittstelle 6 an das erste Modul 1 übermitteln. Dies bietet den Vorteil, dass ein erstes Modul 1 mit vielen verschiedenen zweiten Modulen 2 kombiniert werden kann, wobei die erforderlichen Betriebsdaten dabei aus dem zweiten Modul 2 ausgelesen werden können.

Beispiele für die Rückführgrößen 13 von der LED-Strecke 8 sind der direkt oder indirekt gemessene LED-Strom und/oder die Spannung über der LED-Strecke 8.

In dem Speicher 4, der dem LED-Modul F zugeordnet ist, können Betriebsdaten für die LEDs der LED-Strecke 8 beispielsweise beim Hersteller abgelegt werden. Diese Daten in diesem Speicher 4 können also beispielsweise Kennwerte sein, die zulässige Maximalwerte für Strom und/oder Spannung, Temperaturabhängigkeit von elektrischen oder optischen (Spektren) Parametern der LEDs, etc. Auch diese Betriebsdaten für die LEDs (beispielsweise Daten aus dem Speicher 4) können über die interne Kommunikationsschnittstelle 6 an das erste Modul 1 übermittelt werden.

Wie bereits oben kurz ausgeführt, kann ein erstes Modul 1 im Sinne eines Masters mehrere zweite Module 2 versorgen. Dies bedeutet, dass ein einziges erstes Modul 1 mehrere zweite Module (Lampenmanagementmodule) 2 nicht nur mit einer DC-Versorgungsspannung 5 versorgt, sondern auch mit diesen bidirektional im Sinne einer internen Kommunikationsschnittstelle 6 kommuniziert.

Die Steuereinheit G in dem ersten Modul 1 kann wie oben bereits kurz erläutert die vorzugsweise getaktet ausgeführt das Isolier-Untermodul B ansteuern. Dieselbe Steuereinheit G oder vorzugsweise auch eine weitere (nicht dargestellte) Steuereinheit kann auch den Betrieb des PFCs des Untermoduls A regeln, d.h. beispielsweise Schalter des PFCs des Untermodul A ansteuern und für Signale aus dem Bereich des PFCs, wie beispielsweise Eingangsspannung, Strom durch eine Induktivität des PFCs, Strom durch den Schalter des PFCs, Ausgangsspannung des PFCs, entgegennehmen, wie schematisch durch Pfeile in Fig. 1 dargestellt ist.

Bei dem PFC kann es sich beispielsweise um einen Hochsetzsteller (Boost-Konverter), Sperrwandler (Buck-Boost-Konverter, einen isolierten Sperrwandler (Flyback-Konverter) oder auch SEPIC Konverter handeln.

Typischerweise liegt dabei die Ausgangsspannung V_{Bus} des PFCs des Untermoduls A in einem Bereich von mehreren hundert Volt DC. Aufgrund des Transformators in dem Isolier-Untermodul B kann somit diese DC-Spannung heruntergesetzt werden, beispielsweise auf eine Spannung im Bereich von 20 bis 60 Volt, vorzugsweise 40 bis 50 Volt DC. Somit ist die elektrische Versorgung 5 nach Ausgang des ersten Moduls 1 in einem niedrigeren Pegel als die intern in dem ersten Modul 1 herrschenden Spannungen, was für die Anforderungen beispielsweise an die Isolierung der DC-Versorgungsspannung 5 (elektrischen Leistungsübertragung 5) des zweiten Moduls 2 sowie an das zweite Modul 2 selbst niedrigere Ansprüche stellt. Zusätzlich kann optional eine zweite Ausgangsspannung, beispielsweise eine DC-Niedervoltversorgung für das zweite Modul 2, in dem ersten Modul 1 erzeugt werden und dem zweiten Modul 2 bereitgestellt werden.

Ein Vorteil des modularen Aufbaus mit interner Kommunikationsschnittstelle 6 wie oben geschildert ist, dass das zweite Modul 2 (oder bei dem Vorhandensein mehrerer zweiter Module 2 zumindest einzelne dieser) abgeschaltet werden kann, während das erste Modul 1 weiterhin für die Kommunikationsschnittstelle 6 ansprechbar ist oder ggf. auch über die Kommunikationsschnittstelle 6 Meldungen absenden kann. Somit kann das erste Modul 1 eine Notlichterkennung ausführen (Umschalten von AC auf DC-Versorgung oder gleichgerichtete AC-Versorgung). Darüber hinaus kann die Steuereinheit G, beispielsweise als Mikrocontroller, des ersten Moduls 1 in diesem Ruhezustand nur über den externen Bus 10 mit Leistung versorgt werden, wenn der Ruhezustand des externen Bus 10 (wie beispielsweise bei DALI) ungleich 0 Volt ist. Es kann also eine über den externen Bus 10 übertragene Energie zur Versorgung der Steuereinheit G (insbesondere als Anlaufenergie für die Steuereinheit G oder eine Niedervoltversorgungsschaltung) genutzt werden. Somit kann die eigentliche Spannungsversorgung des ersten Moduls 1 in diesem Ruhezustand abgeschaltet werden. Es ist auch möglich, dass über den externen Bus 10 nur ein Aufwecksignal gesendet wird, welches eine Anlaufenergie als Leistung zur kurzzeitigen Versorgung für die Steuereinheit G oder eine Niedervoltversorgungsschaltung bereitstellt. In diesem Fall kann auch das erste Modul 1 komplett in einen Ruhezustand ohne Energieaufnahme versetzt werden. Das Aufwecksignal kann auch eine Datenübertragung oder ein kurzzeitiges Zuschalten einer Spannung sein.

Wenn mehrere zweite Module 2 (Lampenmanagement-Module) durch ein erstes Modul 1 (Zentralmodul) versorgt werden, können natürlich selektiv ausgewählte dieser mehreren zweiten Module 2 (Lampenmanagement-Module) abgeschaltet werden. Auch dies führt zu einer Einsparung von elektrischen Verlusten. Beispielsweise im Notlichtfall kann vorgesehen sein, dass zum Erreichen der geringeren Grundhelligkeit für den Notlichtbetrieb nur eines bzw. eine Untergruppe der mehreren von dem ersten Modul 1 (Zentralmodul) versorgten zweiten Module 2 (Lampenmanagement-Module) betrieben wird.

Zusätzlich zu der Kommunikationsschnittstelle 6 kann das zweite Modul 2 (Lampenmanagement-Modul) auch eine zusätzliche Schnittstelle (nicht dargestellt) aufweisen. Diese zusätzliche Schnittstelle kann beispielsweise drahtgebunden oder auch drahtlos ausgelegt sein. Über diese Schnittstelle können beispielsweise Daten von dem zweiten Modul 2 ausgelesen werden, insbesondere zu Wartungszwecken, wie beispielsweise dem Austausch eines zweiten Moduls 2. Es kann aber auch eine Aktualisierung der Daten oder Steuersoftware über diese zusätzliche Schnittstelle erfolgen, insbesondere bei einer drahtlosen Kommunikation. Es kann auch möglich sein, über diese zusätzliche Schnittstelle auch bei fehlender DC-Versorgungsspannung 5 (Leistungsübertragung 5) für das zweite Modul 2 insbesondere Daten aus diesem zweiten Modul 2 auszulesen. Vorzugsweise ist die zusätzliche Schnittstelle auf dem zweiten Modul 2 räumlich getrennt von der Kommunikationsschnittstelle 6 angeordnet.

Mit dem gemeinsamen Gehäuse 12 ist eine passive oder vorzugsweise aktive, insbesondere von der Steuereinheit E angesteuerte Kühleinheit 70 verbunden, bspw. ein Ventilator.

### Adaptive Ansteuerung des getakteten DC-DC-Wandlers (Untermodul B) als energieübertragender Konverter

Wie oben bereits erläutert, weist das erste Modul 1 ein Untermodul B auf, das die Funktion eines isolierenden Wandlers aufweist. Dieses Untermodul B wird ausgehend beispielsweise von dem PFC des Untermoduls A mit einer DC-Spannung V_{Bus} versorgt.

Dieses zweite Untermodul B weist wie im Folgenden im Detail erläutert eine getakteten isolierenden DC/DC-Wandler auf. Dieser soll nunmehr unter Bezugnahme auf Figur 2 erläutert werden.

In Figur 2 ist gezeigt, dass die Ausgangsspannung des Moduls A (bspw. PFCs), nämlich die Busspannung V_{Bus} einem Wechselrichter 14 zugeführt ist, der beispielsweise als Halbbrücken-Wechselrichter mit zwei Schaltern S1, S2 ausgebildet sein kann. Die Ansteuersignale für die Taktung der Schalter S1, S2 kann von der Steuereinheit G des ersten Moduls 1 erzeugt werden.

An den Mittenpunkt 29 des Wechselrichters 14 schließt sich im dargestellten Beispiel ein Resonanzkreis 15, hier als Serienresonanzkreis ausgebildet, nämlich ein LLC-Resonanzkreis, an. Im dargestellten Beispiel weist dieser Resonanzkreis 15 eine erste Induktivität 16, einen Koppelkondensator 17, einen Transformator 19 auf. An den Resonanzkreis 15 schließt sich ein Transformator 19 an mit einer Primärwicklung 20 und einer Sekundärwicklung 21. Die Induktivität 16 kann in den Transformator 19 integriert sein, wie später noch erläutert wird.

Hinsichtlich des dargestellten Beispiels ist anzumerken, dass der Transformator 19 als Ersatzschaltbild dargestellt ist. Die Primärwicklung 20 weist dabei in der Realität eine Induktivität 18 als integrierte Streuinduktivität auf und daneben eine Hauptinduktivität Lm, die den Magnetisierungsstrom führt.

Auf den Transformator 19 folgt ein Gleichrichter 22, an dessen Ausgang dann die heruntergesetzte DC-Versorgungsspannung 5 für das Lampenmanagementmodul 2 bereitgestellt wird. Der Transformator 19 sorgt also für die notwendige galvanische Entkopplung (Isolierung bzgl. der dem ersten Modul 1 zugeführten AC-Versorgungsspannung 9). Der Gleichrichter 22 kann wie an sich bekannt mit zwei oder vier Dioden ausgeführt werden, es kann indessen auch ein sogenannter 'synchronous rectifyer' (Synchrongleichrichter) vorgesehen sein, der zwei MOSFETs aufweist. Dieser Synchrongleichrichter führt wie an sich bekannt mit den beiden MOSFETs eine Vollbrückengleichrichtung aus. Der Gleichrichter 22 kann also sowohl als aktiver Gleichrichter (mit aktiv geschalteten Elementen wie beispielsweise MOSFET) oder als passiver Gleichrichter (mit passiv geschalteten Elementen wie Dioden) ausgeführt sein. Es kann eine Vollweggleichrichtung oder auch nur eine Einweggleichrichtung erfolgen. Auf den Gleichrichter folgt wie dargestellt ein Speicherkondensator 23. Es können am Ausgang auch weitere Filterelemente wie beispielsweise eine oder mehrere Induktivitäten und / oder auch zusätzliche Kondensatoren zur Glättung und Stabilisierung der Ausgangsspannung (DC Versorgungsspannung 5) vorhanden sein.

Hinsichtlich des als LLC-Resonanzkreis im dargestellten Beispiel ausgeführten Resonanzkreis 15 ist zu bemerken, dass die Induktivität 16 nicht als eigenes Bauteil vorliegen muss. Vielmehr kann die Streuung der Primärwicklung 20 eines realen Transformators diese Funktion übernehmen. Wenn somit die erste Induktivität 16 durch die Streuung der Primärwicklung 20 des Transformators 19 gebildet werden soll, wird gezielt darauf geachtet, dass keine perfekte Kopplung zwischen Primärwicklung 20 und Sekundärwicklung 21 des Transformators 19 vorliegt. Beispielsweise durch eine entsprechende Beabstandung der Primärwicklung 20 und der Sekundärwicklung 21 des Transformators 19 kann gezielt der notwendige Streueffekt erreicht werden, der funktionell die erste Induktivität 16 erzielen lässt. Indessen diese Streuwirkung nicht ausreichend sein sollte, wird eine tatsächlich auch als separates Bauteil vorliegende Induktivität 16 vorgesehen sein.

Die Kombination des Wechselrichters 14 mit dem Resonanzkreis 15 und dem folgenden Gleichrichter 22 bildet also einen durch den Transformator 19 isolierenden DC/DC-Wandler als Energie übertragenden Konverter. Dabei wird dieser DC/DC-Wandler durch eine stabilisierte Gleichspannung, der Busspannung VBus, gespeist und daraus wird am Ausgang des DC/DC-Wandlers eine DC-Versorgungsspannung 5 erzeugt, welche auch eine stabilisierte Gleichspannung darstellt, wobei diese gegenüber der Busspannung VBus durch den Transformator 19 isoliert ist und vorzugsweise ein anderes Potential aufweist.

Dieses Prinzip findet indessen genauso auch Anwendung auf andere Resonanzschaltungen, die beispielsweise Parallelresonanzschaltungen oder Kombinationen von Serien- und Parallelresonanzschaltungen.

Ein Vorteil der Verwendung einer Resonanzschaltung in einem derartigen Energie übertragenden DC/DC-Wandler in der Ausnutzung einer Resonanzüberhöhung, um bei Nominallast oder hoher Belastung sekundärseitig ein möglichst verlustarmes Schalten der Schalter S1, S2 des Wechselrichters zu ermöglichen. Dazu wird üblicherweise in der Nähe der Resonanzfrequenz des Resonanzkreises oder in der Nähe einer Harmonischen einer Resonanz des Ausgangskreises gearbeitet.

Die Ausgangsspannung (an dem Speicherkondensator 23) des übertragenden Konverters ist somit eine Funktion der Frequenz der Ansteuerung der Schalter S1, S2 des Wechselrichters 14, hier beispielhaft als Halbbrücken-Wechselrichter ausgeführt.

Wenn indessen an dem Ausgang der in Figur 2 dargestellten Schaltung eine geringe Last vorliegt (also das Modul 2 und die LED-Module F in Figur 1 eine geringe elektrische Last darstellen) wird die Ansteuerfrequenz der Schalter S1, S2 des Wechselrichters 14 weg von der Resonanzfrequenz erhöht. Mit der Veränderung der Ansteuerfrequenz ändert sich indessen nunmehr auch der Phasenwinkel zwischen der Spannung und dem AC-Strom an dem Mittenpunkt 29 des Wechselrichters 14.

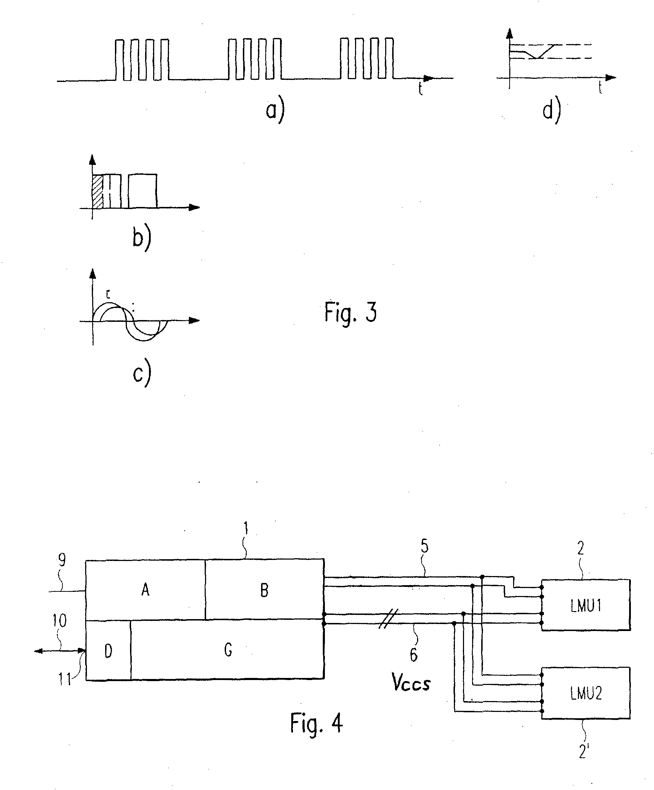

Bei sehr hoher Last (beispielsweise großer Strom durch die LEDs) und somit einem Betrieb nahe der Resonanz ist der Phasenwinkel zwischen Strom und Spannung am Mittenpunkt 29 sehr gering. Wie gesagt, bei geringer Last und somit einem Betrieb weiter entfernt von der Resonanz, wenn also beispielsweise eine geringe Leistung durch die LED-Strecke 8 fließt und somit keine oder nur eine geringe Leistung auf der Sekundärseite des Transformators 19 abgenommen wird, wird der Phasenwinkel sehr groß (siehe Figur 3c) und kann beispielsweise bis zu 50° betragen. In diesem Zustand fließen also weiterhin Ströme durch den Wechselrichter 14, die zu elektrischen Verlusten führen, ohne dass eine nennenswerte Leistung in die LED-Strecke 8 fließt.

Eine kombinierte Regelung kann vorgesehen sein. Die kombinierte Regelung besteht darin, dass für die zu regelnde Größe 'Ausgangsspannung des Energie übertragenden isolierten Konverters' zwei Steuergrößen verwendet werden, nämlich neben der Taktung des wenigstens einen Schalters S1, S2 des Wechselrichters 14 die Veränderung der Busspannung V_{Bus} des Wechselrichters 14. Die Veränderung der Busspannung V_{Bus} kann beispielsweise durch entsprechende Ansteuerung des PFCs des ersten Untermoduls A erreicht werden.

Zusätzlich oder alternativ kann nicht nur die Busspannung V_{Bus} durch entsprechende Ansteuerung des PFCs des ersten Untermoduls A angepasst werden. Abhängig vom Lastzustand oder auch Betriebszustand kann der PFC des ersten Untermoduls A entweder selbstständig oder durch eine entsprechende Ansteuerung, insbesondere durch die Steuereinheit G, den Betriebsmodus wechseln. Insbesondere kann der PFC des ersten Untermoduls A bei einem Betrieb mit hoher Last entweder im sogenannten Grenzbetrieb zwischen lückendem und nichtlückendem Strombetrieb (,Borderline Mode') oder im nichtlückendem Strombetrieb (,continuous conduction mode') arbeiten, und bei Betrieb einer geringen Last oder im Stand-By Modus im lückendem Strombetrieb (,discontinuous conduction mode') arbeiten. Es wäre aber auch beispielsweise möglich, dass der PFC des ersten Untermoduls A bei Betrieb einer geringen Last oder im Stand-By Modus in sogenannten Burst Modus (also eines Puls-Pause-Betriebsmodus oder auch Impulsmodus genannt), wechselt. Dabei wird weiterhin die Versorgungsspannung (Busspannung V_{Bus}) gleichgehalten, aber nach einer Anzahl von Ansteuerimpulsen für den oder die Schalter des PFC eine längere Pause eingelegt, bevor der nächste "Burst" (Impuls) als Ansteuersignal für die Schalter des PFC angelegt wird. Die Pause zwischen den Impulszügen ist dabei wesentlich länger, also beispielsweise mindestens das Doppelte einer Addition der Einschaltzeitdauern der Schalter des PFC.

Es liegt also ein kombiniertes Regelkonzept vor, bei dem abhängig von der Lastaufnahme von einem Rückführsignal, das diese Lastaufnahme direkt oder indirekt wiedergibt, die genannten Steuergrößen kombiniert werden.

Eine weitere Möglichkeit ist es, in der Steuergröße "Frequenz der Schalter" bei gleichbleibender Frequenz die Totzeit (siehe Figur 3b) zwischen den Einschaltzeitdauern der Schalter S1, S2 des Wechselrichters 14 zu verlängern. Es kann also beispielsweise die Frequenzverringerung der Leistungsbereitstellung zu einer maximal zulässigen Ansteuerfrequenz der Schalter S1, S2 des Wechselrichters 14 erhöht werden. Bei dieser maximal zulässigen Frequenz (entsprechend dem maximal zulässigen Phasenwinkel) wird dann die zweite Steuergröße zur weiteren Verringerung der Leistungsaufnahme verwendet, nämlich die Verlängerung der Totzeit zwischen den Einschaltzeitdauern der Schalter S1, S2.

Bei diesem Burst-Modus, bei dem die Steuergröße also die Länge der aus Totzeit zwischen zwei Impulszügen ist, wird es natürlich zu einem gewissen "Rippel" der Spannung an der Ausgangsseite, also am Speicherkondensator 23 kommen, wie in Figur 3d dargestellt. Erfindungsgemäß kann nunmehr vorgesehen sein, dass ein zulässiger Rippel-Korridor um einen Sollwert für die Spannung an dem Speicherkondensator 23 vorgegeben ist. Wenn die Spannung nach einer gewissen Anzahl an Impulsen eines Impulszuges (Bursts) den oberen Grenzwert des Rippel-Korridors erreicht hat, wird eine längere Impulspause eingelegt. In dieser Impulspause des Burst-Betriebsmodus sinkt die Spannung am Speicherkondensator 23 dann ab, bis sie den unteren Grenzwert des vorgegebenen Rippel-Korridors erreicht. Beim Erreichen des unteren Grenzwerts wird der nächste Impulszug angelegt, so dass sich dieses Ansteigen und Abfallen der Spannung (Rippel) am Speicherkondensator 23 zyklisch wiederholen wird. Es liegt also eine hysteretische Regelung vor. Die Burst Pakete (also der Zeitraum, in dem kurzzeitig getaktet wird) können dabei relativ kurz gehalten werden. Auf diese Weise kann Störungen und auch hörbaren Geräuschen entgegengewirkt werden. Alternativ können die Bursts auch mit einer veränderlichen Wiederholrate und / oder Dauer der Pakete erzeugt werden. Wenn das Untermodul C als getaktete Konstantstromquelle ausgeführt ist, dann kann der in dem Burst-Betriebsmodus auftretende Rippel der DC-Versorgungsspannung 5 durch eine entsprechende Ansteuerung der getaktete Konstantstromquelle kompensiert werden. Dies kann beispielsweise mittels eine Regelschleife für eine Ausregelung des LED-Stromes oder einen Betrieb der getakteten Konstantstromquelle in Abhängigkeit von der Amplitude der DC-Versorgungsspannung 5 erfolgen.

Wie bereits erwähnt erfolgt die adaptive Einstellung des Betriebsmodus (Steuergröße) des DC-DC-Wandlers abhängig von der Last auf der Sekundärseite, d.h. der Last, die durch die Spannung an dem Speicherkondensator 23 versorgt ist. Dazu kann ein die Last wiedergebendes Signal an die Ansteuerschaltung (IC in der Steuereinheit G in Fig. 1) zurückgeführt werden, oder ein extern zugeführtes Dimmsignal verwendet werden. Die Leistungsaufnahme der Last kann dabei sekundärseitig (bezüglich des Transformators 19), aber auch auf der Primärseite des Transformators 19 gemessen werden. Beispielsweise kann als ein die Leistungsaufnahme der Last wiedergebendes Signal der Spannungsabfall über einen Messwiderstand 24 in Serie zu den Schaltern S1, S2 oder zumindest in Serie zu einem der Schalter S1, S2 des Wechselrichters 14 verwendet werden. Die eigentliche Leistungsaufnahme stellt dann im Wesentlichen ein Produkt der (gemessenen oder zumindest durch den PFC konstant gehaltenen) Versorgungsspannung (Busspannung V_{Bus}) mit diesem über den Spannungsabfall am Messwiderstand 24 gemessenen Strom durch den Wechselrichter 14 dar.

In dem obigen Beispiel wurde eine primärseitige Erfassung für ein die Leistungsaufnahme der Last wiedergebendes Signal gegeben. Natürlich können indessen auch sekundärseitige Rückführsignale, beispielsweise der Strom durch die und/oder die Spannung über der LED-Strecke 8, etc. als Rückführsignal verwendet werden, welches Rückführsignal die Leistungsaufnahme der Last wiedergibt.

Ein bevorzugter Ablauf der adaptiven kombinierten Regelung ist es dabei, die Verringerung für die Last dadurch durchzuführen, dass kontinuierlich die Ansteuerfrequenz der Schalter S1, S2 des Wechselrichters 14 erhöht wird, bis einen fest vorgegebene Maximalfrequenz erreicht wird. Wenn diese Maximalfrequenz erreicht ist, aber die zugeführte Leistung für die Last weiter verringert werden soll, wird dann adaptiv die Ansteuerschaltung eine der oben angeführten weiteren Betriebsarten wählen. Wenn beispielsweise bei Erreichen der zulässigen Maximalfrequenz die Busspannung V_{Bus} abgesenkt wird, kann dann die zulässige Maximalfrequenz der Ansteuerung der Schalter S1, S2 beibehalten werden, oder auch wenn dies durch Absenken der Busspannung V_{Bus} oder der anderen gewählten Steuergröße überkompensiert werden kann, die Ansteuerfrequenz sogar wieder auf einen niedrigeren Sollwertbereich abgesenkt werden.

Es folgt also ein Umschalten der Steuergröße für die Leistungszufuhr für die Sekundärseite beim Erreichen der Maximalfrequenz. Beispiele für eine weitere Steuergröße die dann ergänzend oder alternativ zu der Veränderung der Ansteuerfrequenz verwendet wird, wurde bereits die Veränderung (Absenkung) der Versorgungsspannung (Busspannung V_{Bus}), die Veränderung der Totzeit zwischen den Einschaltdauern der beiden Schalter S1, S2 oder die Verlängerung der Totzeit zwischen zwei Impulszügen im Burst-Modus genannt. Dabei kann auch eine Kombination von weiteren Steuergrößen genutzt werden, beispielsweise können sowohl das Einschaltverhältnis als auch die Totzeit geändert werden.

Es liegt somit grundsätzlich eine alternative Ansteuerung eines getakteten DC-DC Wandlers vor, wobei sich die Attraktivität auf die Adaption der Steuergrößen abhängig von der Lastaufnahme der Sekundärseite des DC-DC-Wandlers bezieht.

Eine weitere Möglichkeit ist es, in der Steuergröße "Frequenz der Schalter" bei gleichbleibender Frequenz die Totzeit (siehe Figur 3b) zwischen den Einschaltzeitdauern der Schalter S1, S2 des Wechselrichters 14 zu verlängern. Es kann also beispielsweise die Frequenzverringerung der Leistungsbereitstellung zu einer maximal zulässigen Ansteuerfrequenz der Schalter S1, S2 des Wechselrichters 14 erhöht werden. Bei dieser maximal zulässigen Frequenz (entsprechend dem maximal zulässigen Phasenwinkel) wird dann die zweite Steuergröße zur weiteren Verringerung der Leistungsaufnahme verwendet, nämlich die Verlängerung der Totzeit zwischen den Einschaltzeitdauern der Schalter S1, S2.

Eine weitere Möglichkeit ist es, bei gleichbleibender Frequenz das Verhältnis von Einschaltzeitdauer zu Ausschaltzeitdauer der Schalter S1, S2 des Wechselrichters 14 zu verändern (also das Einschaltverhältnis). Vorzugsweise wird das Einschaltverhältnis mit Abnahme der Last verringert. Es kann also beispielsweise die Frequenzerhöhung der Leistungsbereitstellung zu einer maximal zulässigen Ansteuerfrequenz der Schalter S1, S2 des Wechselrichters 14 erhöht werden. Bei dieser maximal zulässigen Frequenz (entsprechend dem maximal zulässigen Phasenwinkel) wird dann die zweite Steuergröße zur weiteren Verringerung der Leistungsaufnahme verwendet, nämlich die Veränderung der Einschaltzeitdauer der Schalter S1, S2 (bei gleichbleibender Frequenz).

Eine weitere Möglichkeit, eine weitere Steuergröße einzuführen, ist die Einführung eines sogenannten Burst Modes (also eines Puls-Pause-Betriebsmodus oder auch Impulsmodus genannt), siehe Figur 3a. Dabei wird weiterhin die Versorgungsspannung (Busspannung V_{Bus}) gleichgehalten, aber zumindest dann, wenn die Ansteuerfrequenz einen maximal zulässigen Wert erhalten wird, zur Verringerung der Lastbereitstellung die Frequenz nicht mehr weiter erhöht. Vielmehr werden nach einer Anzahl von Ansteuerimpulsen für beide Schalter S1, S2 (die Anzahl ist dabei größer als 1) eine längere Pause eingelegt, bevor der nächste "Burst" (Impuls) als Ansteuersignal für die Schalter S1, S2 angelegt wird. Die Pause zwischen den Impulszügen ist dabei wesentlich länger, also beispielsweise mindestens das Doppelte einer Addition der Einschaltzeitdauern der Schalter S1, S2.

Bei diesem Burst-Modus, bei dem die Steuergröße also die Länge der aus Totzeit zwischen zwei Impulszügen ist, wird es natürlich zu einem gewissen "Rippel" der Spannung an der Ausgangsseite, also am Speicherkondensator 23 kommen, wie in Figur 3d dargestellt. Erfindungsgemäß kann nunmehr vorgesehen sein, dass ein zulässiger Rippel-Korridor um einen Sollwert für die Spannung an dem Speicherkondensator 23 vorgegeben ist. Wenn die Spannung nach einer gewissen Anzahl an Impulsen eines Impulszuges (Bursts) den oberen Grenzwert des Rippel-Korridors erreicht hat, wird eine längere Impulspause eingelegt. In dieser Impulspause des Burst-Betriebsmodus sinkt die Spannung am Speicherkondensator 23 dann ab, bis sie den unteren Grenzwert des vorgegebenen Rippel-Korridors erreicht. Beim Erreichen des unteren Grenzwerts wird der nächste Impulszug angelegt, so dass sich dieses Ansteigen und Abfallen der Spannung (Rippel) am Speicherkondensator 23 zyklisch wiederholen wird. Es liegt also eine hysteretische Regelung vor. Die Burst Pakete (also der Zeitraum, in dem kurzzeitig getaktet wird) können dabei relativ kurz gehalten werden. Auf diese Weise kann Störungen und auch hörbaren Geräuschen entgegengewirkt werden. Alternativ können die Bursts auch mit einer veränderlichen Wiederholrate und / oder Dauer der Pakete erzeugt werden. Wenn das Untermodul C als getaktete Konstantstromquelle ausgeführt ist, dann kann der in dem Burst-Betriebsmodus auftretende Rippel der DC-Versorgungsspannung 5 durch eine entsprechende Ansteuerung der getaktete Konstantstromquelle kompensiert werden. Dies kann beispielsweise mittels eine Regelschleife für eine Ausregelung des LED-Stromes oder einen Betrieb der getakteten Konstantstromquelle in Abhängigkeit von der Amplitude der DC-Versorgungsspannung 5 erfolgen.

Wie bereits erwähnt erfolgt die adaptive Einstellung des Betriebsmodus (Steuergröße) des DC-DC-Wandlers abhängig von der Last auf der Sekundärseite, d.h. der Last, die durch die Spannung an dem Speicherkondensator 23 versorgt ist. Dazu kann ein die Last wiedergebendes Signal an die Ansteuerschaltung (IC in der Steuereinheit G in Fig. 1) zurückgeführt werden, oder ein extern zugeführtes Dimmsignal verwendet werden. Die Leistungsaufnahme der Last kann dabei sekundärseitig (bezüglich des Transformators 19), aber auch auf der Primärseite des Transformators 19 gemessen werden. Beispielsweise kann als ein die Leistungsaufnahme der Last wiedergebendes Signal der Spannungsabfall über einen Messwiderstand 24 in Serie zu den Schaltern S1, S2 oder zumindest in Serie zu einem der Schalter S1, S2 des Wechselrichters 14 verwendet werden. Die eigentliche Leistungsaufnahme stellt dann im Wesentlichen ein Produkt der (gemessenen oder zumindest durch den PFC konstant gehaltenen) Versorgungsspannung (Busspannung V_{Bus}) mit diesem über den Spannungsabfall am Messwiderstand 24 gemessenen Strom durch den Wechselrichter 14 dar.

In dem obigen Beispiel wurde eine primärseitige Erfassung für ein die Leistungsaufnahme der Last wiedergebendes Signal gegeben. Natürlich können indessen auch sekundärseitige Rückführsignale, beispielsweise der Strom durch die und/oder die Spannung über der LED-Strecke 8, etc. als Rückführsignal verwendet werden, welches Rückführsignal die Leistungsaufnahme der Last wiedergibt.

Ein bevorzugter Ablauf der adaptiven kombinierten Regelung ist es dabei, die Verringerung für die Last dadurch durchzuführen, dass kontinuierlich die Ansteuerfrequenz der Schalter S1, S2 des Wechselrichters 14 erhöht wird, bis einen fest vorgegebene Maximalfrequenz erreicht wird. Wenn diese Maximalfrequenz erreicht ist, aber die zugeführte Leistung für die Last weiterverringert werden soll, wird dann adaptiv die Ansteuerschaltung einer der oben angeführten weiteren Betriebsarten wählen. Wenn beispielsweise bei Erreichen der zulässigen Maximalfrequenz die Busspannung V_{Bus} abgesenkt wird, kann dann die zulässige Maximalfrequenz der Ansteuerung der Schalter S1, S2 beibehalten werden, oder auch wenn dies durch Absenken der Busspannung V_{Bus} oder der anderen gewählten Steuergröße überkompensiert werden kann, die Ansteuerfrequenz sogar wieder auf einen niedrigeren Sollwertbereich abgesenkt werden.

Es folgt also ein Umschalten der Steuergröße für die Leistungszufuhr für die Sekundärseite beim Erreichen der Maximalfrequenz. Beispiele für eine weitere Steuergröße die dann ergänzend oder alternativ zu der Veränderung der Ansteuerfrequenz verwendet wird, wurde bereits die Veränderung (Absenkung) der Versorgungsspannung (Busspannung V_{Bus}), die Veränderung der Totzeit zwischen den Einschaltdauern der beiden Schalter S1, S2 oder die Verlängerung der Totzeit zwischen zwei Impulszügen im Burst-Modus genannt. Dabei kann auch eine Kombination von weiteren Steuergrößen genutzt werden, beispielsweise können sowohl das Einschaltverhältnis als auch die Totzeit geändert werden.

Es liegt somit grundsätzlich eine alternative Ansteuerung eines getakteten DC-DC Wandlers als Untermodul B vor, wobei sich die Adaptivität auf die Adaption der Steuergrößen abhängig von der Lastaufnahme der Sekundärseite des DC-DC-Wandlers bezieht. Das Untermodul B kann auch durch einen Wechselrichter mit einem Schalter gebildet werden, beispielsweise als Class-E Konverter oder quasi-resonanter Flyback-Konverter, wobei jeweils eine Gleichrichtung und Glättung am Ausgang erfolgt.

Wie in Fig. 1 und 2 bereits dargestellt kann an dem Speicherkondensator 23 ein zweites Modul 2 mit einer weiteren Konverterstufe (weiteres Untermodul C als Konstantstromquelle) angeschlossen sein, wobei das zweite Modul 2 (Lampenmanagementmodul) eine Steuereinheit E, z.B. als integrierte Schaltung, aufweisen kann. Das weitere Untermodul C kann sowohl als getaktete Konstantstromquelle (also beispielsweise als Tiefsetzsteller, d.h. Buck-Konverter) oder als Linearregler (realisiert mit Transistoren oder integrierten Schaltkreisen) ausgeführt sein. Es können aber auch direkt LEDs an den Ausgang des zweiten Untermoduls B angeschlossen werden.

Externe Dimmbefehle können, wie in Fig. 1 dargestellt, der Steuereinheit G des ersten Moduls 1, aber auch der Steuereinheit E des zweiten Moduls 2 zugeführt werden. Im zweiten Fall kann die Steuereinheit E des zweiten Moduls 2 die Dimminformation an die Steuereinheit G des ersten Moduls 1 übertragen, so dass für die Leistungsaufnahme kein Messsignal vorliegen muss, sondern vielmehr aus einer der Steuereinheit G für den DC-DC-Wandler im zweiten Modul B vorliegende Dimminformation verwendet werden kann.

Die adaptive Einstellung des zweiten Untermoduls B kann aber auch aufgrund eines von extern zugeführten Dimmbefehls oder auch aufgrund einer Rückmeldung durch das zweite Modul 2 erfolgen.

Die Ansteuerung der Schalter S1, S2 des Wechselrichters 14 kann über die Steuereinheit G über eine Treiberstufe erfolgen. Vorzugsweise ist zumindest die Treiberstufe für die auf hohem Potential liegenden Schalter des Wechselrichters für eine Ansteuerung auf hohem Spannungspotential ausgelegt. Beispielsweise handelt es sich bei dieser Treiberstufe um eine Pegelversatzstufe, eine Treiberstufe mit Transformator oder eine Treiberstufe mit Luftspule. Diese Treiberstufe kann auch in die Steuereinheit G integriert sein.

Die Steuereinheit G kann weiterhin Mittel zur Vermeidung von Fehlern beim Betrieb des Wechselrichters aufweisen. So können beispielsweise Überstromabschaltungen oder Strombegrenzungen für den Strom durch zumindest einen Schalter vorhanden sein. Es kann auch die Totzeit für die Ansteuerung des Wechselrichters einstellbar sein (d.h. die Zeitspanne zwischen dem Öffnen des einen Schalters (bspw. S1) und dem Schließen des zweiten Schalter (S2)). Vorzugsweise ist diese Totzeit auch adaptiv einstellbar, beispielsweise abhängig von der Mittelpunktspannung am Wechselrichter 14 oder vom Strom oder der Spannung über einem Schalter des Wechselrichters 14.

Die Steuereinheit G kann auch die Busspannung V_{Bus} überwachen, insbesondere auch den Rippel der Busspannung V_{Bus} (d.h. die Schwankungen innerhalb einer bestimmten Zeit). Abhängig von der Auswertung des Rippels der Busspannung V_{Bus} kann die Steuereinheit G die Ansteuerung des Wechselrichters 14 beeinflussen. Insbesondere kann sie die Frequenz des Wechselrichters 14 an die Auswertung des Rippels der Busspannung V_{Bus} anpassen, um den Rippel am Ausgang des Wechselrichter 14 zu reduzieren. Vorzugsweise wird dabei die Frequenz des Wechselrichters bei steigender Busspannung V_{Bus} erhöht, und bei sinkender Busspannung V_{Bus} abgesenkt. Auf diese Weise kann erreicht werden, dass dieser Rippel auf der Busspannung V_{Bus} weniger stark an den Ausgang des Wechselrichters 14 weitergeführt wird.

### Datenkommunikation zwischen dem ersten Modul 1 und dem zweiten Modul 2 (Lampenmanagement-Modul):

Bezugnehmend auf Figur 4 soll nunmehr die Kommunikationsschnittstelle 6 (interner Bus) zwischen dem ersten Modul 1 und einem oder mehreren zweiten Module 2, 2' als Lampenmanagement-Module erläutert werden.

Aufgrund der Tatsache, dass über den internen Bus mehrere zweiten Module 2, 2' nicht nur mit Leistung (Übertragungsstrecke 5), sondern auch unidirektional oder bidirektional mittels Datenaustausch in Verbindung stehen (über die Kommunikationsschnittstelle 6), kann das erste Modul 1 auch als Zentraleinheit oder auch Master bezeichnet werden. Die zweiten Module 2, 2' können als Slaves bezeichnet werden.

Wie bereits eingangs erwähnt liegt hinsichtlich des internen Busses für die Kommunikationsschnittstelle 6 eine vorzugsweise standardisierte Kommunikation vor, die zusätzlich zu der DC-Versorgungsspannung 5 vorgesehen ist. Unter "standardisiert" ist zu verstehen, dass das Protokoll der Kommunikationsschnittstelle 6 unabhängig ist von dem Protokoll der externen Kommunikation über die Datenschnittstelle 11 des ersten Moduls 1.

Vorzugsweise ist die Kommunikation über die Kommunikationsschnittstelle 6 bidirektional und kann beispielsweise gemäß einem SPI-Protokoll (Serial Peripheral Interface) erfolgen.

Auch die Datenkommunikation über die Kommunikationsschnittstelle 6 (internen Bus) erfolgt vorzugsweise potentialgetrennt, beispielsweise unter Verwendung von Optokopplern oder Transformatoren. Beispielsweise kann bei der Verwendung von einem oder mehreren Transformatoren für eine potentialgetrennte Kommunikationsschnittstelle 6 der Transformator hochfrequent getaktet werden und somit Daten über Pakete hochfrequenter Takte übertragen. Durch den Einsatz einer potentialgetrennten Kommunikationsschnittstelle 6 kann der Benutzer und auch die angeschlossenen weiteren Module vor möglichen Überspannungen, beispielsweise aufgrund eines Defekts in einem der Module, geschützt werden. Auch wird durch die potentialgetrennte Ausführung der Kommunikationsschnittstelle 6 die Robustheit des Beleuchtungssystems erhöht, beispielsweise wird die Abtrennung und der Austausch eines zweiten Moduls 2 erleichtert.

Eine grundsätzliche Funktion der Kommunikationsschnittstelle 6 kann die Weitergabe von Dimmbefehlen von dem ersten Modul 1 an die zweiten Module 2 sein, welche beispielsweise über den externen Bus 10 empfangen worden sind. Dabei können auch aus den über den externen Bus 10 empfangenen Dimmbefehlen neue Steuerinformationen oder Befehle für die zweiten Module 2 abgeleitet werden.

Ein Anwendungsfall für die bidirektionale Datenkommunikation über den internen Bus (Kommunikationsschnittstelle 6) ist es, dass Daten, die in einem der zweiten Module 2, 2' abgespeichert sind, über den internen Bus (Kommunikationsschnittstelle 6) zu der Steuereinheit G des ersten Moduls 1 übertragen werden können. Dies ist insofern von Vorteil, als das die Datenspeicherung in den zweiten Modulen 2, 2' näher an der LED-Strecke 8 liegt, so dass dort eine höhere Erwärmung stattfindet, die zu einem gegebenenfalls nicht wieder herstellbaren Datenverlust der Speicherung im Bereich der Lampenmanagementmodule (zweiten Modulen 2, 2') folgen kann. Auch durch die Übertragung über die Kommunikationsschnittstelle 6 zu dem ersten Modul 1 können diese Daten dann dem ersten Modul 1 im Sinne eines Backups nochmal gespeichert werden.

Beispiele für diese über die Kommunikationsschnittstelle 6 übertragenen Daten sind Betriebsdaten für die LED-Strecke 8, wie beispielsweise Temperaturen, Betriebszeitdauern, elektrische Parameter etc.

Nachdem die Daten von einem der Lampenmanagementmodule (zweite Module 2, 2', ..., 2ⁿ') zum ersten Modul 1 übertragen sind, können sie natürlich gegebenenfalls weiter verarbeitet auch über den externen an der Datenschnittstelle 11 angeschlossenen Bus 10 ausgelesen werden. Somit kann über den externen Bus 10 eine weitere Analyse der Betriebsdaten, beispielsweise eine Ausfalls-Analyse, eine Alterungskompensation abhängig von der übertragenen Betriebszeitdauer der LED-Strecke 8, etc. erfolgen.

Der standardisierte Ansatz für den internen Bus (Kommunikationsschnittstelle 6) hat auch den Vorteil, dass Lampenmanagement-Module (zweite Module 2, 2') in einfacher Weise ausgetauscht werden können. Die Zufuhr in einer auszutauschenden Lampenmanagement-Modul (zweite Module 2, 2') abgespeicherte Daten können wir oben bereits beschrieben nach Übertragung über die Kommunikationsschnittstelle 6 in dem ersten Modul 1 abgespeichert werden. Wenn dann das Lampenmanagement-Modul ausgetauscht ist, können die in dem ersten Modul 1 abgelegten Betriebsdaten wieder zu dem neu eingesetzten Lampenmanagement-Modul übertragen werden, so dass dieses dann identisch zu dem ersetzten Lampenmanagement-Modul konfiguriert ist.

Weitere Beispiele für derartige Betriebsdaten sind Farbkoordinaten, Farbort oder andere das Spektrum der LED-Strecke 8 beeinflussende Parameter.

Über die Kommunikationsschnittstelle 6 können auch Lastwechsel oder besondere Betriebszustände oder vergleichbare Ereignisse von einem zweiten Modul 2, 2' über die Kommunikationsschnittstelle 6 an das erste Modul 1 übertragen werden. Es kann damit eine Vorabsignalisierung von zu erwartenden Lastwechseln oder Betriebszustandsänderungen erfolgen, so dass die Steuereinheit G im ersten Modul 1 die Ansteuerung des PFCs im ersten Untermodul A und/oder die Ansteuerung des zweiten Untermodul B entsprechend adaptiv anpasst. Beispielsweise kann abhängig von einem über die Kommunikationsschnittstelle 6 von einem zweiten Modul 2, 2' übertragenen zu erwartenden Lastwechsel oder Betriebszustandswechsel die Steuereinheit G des ersten Moduls 1 Parameter für den in Figur 2 dargestellten Wechselrichter 14 und/oder Reglereigenschaften für die Ansteuerung des PFCs im ersten Untermodul A anpassen.

Natürlich kann auch eine Art Vorabinformation umgekehrt, d.h. von dem ersten Modul 1 hin zu den zweiten Modulen 2, 2' erfolgen. Wenn beispielsweise das erste Modul 1 über den externen Bus 10 und die Datenschnittstelle 11 bzw. die Schnittstellenschaltung D Dimmbefehle erhält, die einen Lastwechsel der LED-Strecke 8 bedeuten, können derartige Informationen bzw. ein den Betriebszustandswechsel wiedergebendes Signal über den Bus bzw. die Kommunikationsschnittstelle 6 an die zweiten Modulen 2, 2' übertragen werden, so dass auch die in den zweiten Modulen 2, 2' vorgesehene Steuereinheit E Steuerparameter, beispielsweise für die Konstantstromquelle (weiteres Untermodul C) entsprechend dem zu erwartenden Lastwechsel anpassen können.

Das in Figur 4 gezeigte Master/Slave-System hat auch Vorteile hinsichtlich der Verringerung elektrischer Verluste, da eine Art Standby-Betrieb vorgesehen sein kann, in dem eines, mehrere, oder auch alle der an einem ersten Modul 1 angeschlossenen zweiten Module 2, 2' abgeschaltet werden, während zumindest die Steuereinheit G des ersten Moduls 1 weiterhin den extern angeschlossenen Bus 10 über die Datenschnittstelle 11 bzw. die Schnittstellenschaltung D überwachen kann.

Extern ist das in der Figur 4 dargestellte Master/Slave-System vorzugsweise nur über den an der Datenschnittstelle 11 bzw. die Schnittstellenschaltung D des ersten Moduls 1 angeschlossenen Bus 10 ansprechbar. Indessen kann es eine interne hierarchische Aufteilung, ggf. inklusive Adressierung über den internen Bus (Kommunikationsschnittstelle 6) hin zu den mehreren anschließbaren zweiten Modulen 2, 2' geben.

Somit kann einerseits eine adressierte Kommunikation hin zu den zweiten Modulen 2, 2' erfolgen. Alternativ oder zusätzlich kann indessen auch ein Broadcast-Modus vorgesehen sein, d.h. eine nicht andressierte Datenübermittlung von dem ersten Modul 1 an alle angeschlossenen zweiten Module 2, 2'. In diesem Broadcast-Modus wird ein von dem ersten Modul 1 über den internen Bus (Kommunikationsschnittstelle 6) ausgesandter Befehl von allen zweiten Modulen 2, 2' empfangen und ausgewertet.

Im Notlichtfall kann vorgesehen sein, dass sobald durch das erste Modul 1 eine Notlichterkennung erfolgt ist, über die Kommunikationsschnittstelle 6 ein entsprechender Steuerbefehl übertragen wird und die zweiten Module 2, 2' entsprechend ihren Betreib anpassen. Beispielsweise kann zum Erreichen einer geringeren Grundhelligkeit und somit eines geringeren Energieverbrauchs für den Notlichtbetrieb nur eines bzw. eine Untergruppe der mehreren von dem ersten Modul 1 versorgten zweiten Module 2 betrieben werden.

Die Kommunikationsschnittstelle 6 kann auch zur Übertragung der Niedervoltversorgung genutzt werden (es erfolgt dann sowohl eine Datenkommunikation als auch eine Energieübertragung, beispielsweise über die sekundärseitige DC-Niedervoltspannungsversorgung V_{CCs}). Beispielsweise kann eine sogenannte Active Low Datenübertragung genutzt werden, wobei im Ruhezustand ein Pegel von einigen Volt, beispielsweise 12V, anliegt. Bei einer Kopplung beispielsweise über Transformatoren könnte somit auch bei einer galvanischen Trennung der Kommunikationsschnittstelle 6 trotzdem auch Energie übertragen werden.

### Niedervoltversorgung

Unter Bezugnahme auf Fig. 5 soll nunmehr eine Niedervoltversorgung in dem in Fig. 1 gezeigten modularen System erläutert werden.

Es wird im Weiteren dann erläutert werden, wie durch eine derartige Niedervoltversorgung beispielsweise auch durch ein zweites Modul (Lampenmanagementmodul) aktive Kühlmittel 40, wie beispielsweise ein Ventilator, eine Pumpe, ein Peltier-Element etc. versorgt werden können. Derartiges aktives Kühlelement 40 wird also nicht direkt ausgehend von dem ersten Modul 1, sondern vorzugsweise individuell über jedes angeschlossene zweite Modul 2 (Lampenmanagementmodul) mit elektrischer Leistung versorgt.

In der Figur 5 ist wiederum gezeigt, wie die Busspannung V_{Bus}, beispielsweise durch das PFC-Modul des ersten Moduls 1 erzeugt, einem Wechselrichter zugeführt wird. Im dargestellten Beispiel weist der Wechselrichter nur einen Schalter S1 im Gegensatz zu dem Wechselrichter 14 als Halbbrückenwechselrichter von Fig. 2 auf. Im dargestellten Beispiel ist folgend auf den Wechselrichter mit dem Schalter S1 die Primärwicklung 20 des Transformators 19 gezeigt. Wiederum wird ausgehend von der Sekundärwicklung 21 des Transformators 19 ein Gleichrichter 22 versorgt, bei dem die Ausgangsspannung des Gleichrichters 22 direkt oder indirekt der LED-Strecke 8 zugeführt ist. Somit stellen die Primär- und Sekundärwicklungen 20, 21 den bereits weiter oben erläuterten Pfad zur elektrischen Leistungsversorgung (DC-Versorgungsspannung 5) der LED-Strecke des LED-Modul F dar.

Bei dem Wechselrichter gemäß Fig. 5 kann es sich um einen Konverter mit einem oder mehreren Schaltern wie beispielsweise einen Halbbrückenwechselrichter (siehe Beispiel Fig.2) oder isolierten Sperrwandler (Flyback-Konverter) handeln. Vorzugsweise arbeitet dieser resonant oder quasi-resonant.

Zusätzlich zu diesem Übertragungspfad gibt es nunmehr einen weiteren Niedervolt-Übertragungspfad. Dieser weist eine weitere Sekundärwicklung 30 auf, die also ebenfalls magnetisch mit der Primärwicklung 20 gekoppelt ist. Über eine Gleichrichterschaltung mit einer Diode 31 und einem Kondensator 32 wird durch entsprechend Wahl der Wicklungsverhältnisse der Wicklungen 20, 30 eine sekundärseitige DC-Niedervoltspannungsversorgung V_{CCS}, im Weiteren auch als erste Niedervoltspannung bezeichnet, erzeugt. In der Figur ebenfalls dargestellt, ist diese sekundärseitige DC-Niedervoltspannungsversorgung V_{CCS} ebenfalls dem zweiten Modul 2 zugeführt.

Das zweite Modul 2 kann dann diese Niedervoltspannungsversorgung in unterschiedlicher Weise verwenden, nämlich:
- zur Versorgung der integrierten Steuereinheit E im Lampenmanagementmodul (zweiten Modul 2),
- zur selektiv gesteuerten Ansteuerung von aktiven Kühlmitteln 40, und/oder zur aktiven Versorgung weiterer angeschlossener Aktoren oder Sensoren, die schematisch mit dem Bezugszeichen 41 bezeichnet sind.

Wie in der Figur 5 weiterhin dargestellt, ist eine noch weitere (und somit dritte) Sekundärwicklung 33 magnetisch mit der Primärwicklung 20 des Transformators 19 gekoppelt. Diese Sekundärwicklung 33 speist einen Gleichrichter mit einer Diode 42 und einem Kondensator 43, dient zur Erzeugung einer primärseitigen Niedervoltspannungsversorgung V_{CCP}, im Weiteren auch als zweite Niedervoltspannung bezeichnet. Unter primärseitig ist dabei zu verstehen, dass diese Niedervoltspannungsversorgung V_{CCP} im ersten Modul 1 verwendet wird (also auf der Netzseite, d.h. vor einer Potentialtrennung), beispielsweise als Niedervoltspannungsversorgung für die interne integrierte Steuereinheit G des ersten Moduls 1.

Während die Leistungsübertragung über die Strecke der DC-Versorgungsspannung 5 zur Speisung des LED-Modul F beispielsweise 48 Volt DC betragen kann, ist der Spannungspegel der Niedervoltspannungsversorgungen V_{CCS} und V_{CCP} deutlich geringer, und beispielsweise in einem Bereich von 2 bis 12 Volt DC.

Es können also zwei unterschiedliche DC-Spannungsversorgungen von dem ersten Modul 1 an jedes angeschlossene zweite Modul 2 zugeführt werden.

Das Beleuchtungssystem kann auch derart betrieben werden, dass das zweite Untermodul B die Speisung der DC-Versorgungsspannung 5 deaktiviert und nur die Niedervoltversorgung (bspw. die sekundärseitige DC-Niedervoltspannungsversorgung V_{CCs}) aufrecht erhält. Dies kann beispielsweise in einem Fehlerbetrieb oder Ruhemodus erfolgen. Auf diese Weise können beispielsweise vorhandene Sensoren wie der Sensor 41 weiterhin ausgewertet werden und es kann beispielsweise auch die Kommunikationsschnittstelle 6 aktiviert bleiben. Vorzugsweise wird dafür weiterhin die Steuereinheit E zumindest in einem reduzierten Betriebsmodus weiterbetrieben (beispielsweise mit reduzierter Funktionalität).

Der Sensor 41, der funktionell dem zweiten Modul 2 zugeordnet ist, kann ein Helligkeitssensor, beispielsweise eine Photodiode mit optionaler Auswertelogik, oder ein Farbsensor sein.

Der Sensor 41, der funktionell dem zweiten Modul 2 zugeordnet ist, kann natürlich auch ein Temperatursensor sein, dessen Ausgangssignal beispielsweise zur Ermittlung der Temperatur der LED-Junction der LEDs des LED-Moduls F verwendet werden kann. Andererseits kann dieser Sensor 41 als Temperatursensor auch zur Regelung des Betriebs der aktiven Kühlung, beispielsweise des Kühlmittels 40 (vorzugsweise als Ventilator) verwendet werden.

Alternativ oder zusätzlich kann natürlich auch eine Temperaturermittlung der Temperatur der LED-Junction durch Auswertung der Kennlinie und Messung elektrischer Parameter der LED-Strecke des LED-Moduls F erfolgen.

Dadurch, dass die primärseitige Niedervoltspannungsversorgung V_{CCP} über eine für die Erzeugung der sekundärseitigen Niedervoltspannungsversorgung V_{CCS} unabhängige Wicklung 33 erfolgt, liegt somit eine Potentialtrennung vor.

Wie eine Zusammenschau der Figuren 2 und 5 erkennen lässt kann ein Wechselrichter mit einem Schalter S1 oder mehreren Schaltern S1, S2 vorliegen. Als weitere Beispiele neben dem in Figur 2 dargestellten Halbbrücken-Wechselrichters 14 sind zu nennen der Flyback-Konverter, ein SEPIC oder ein Vorwärtswandler. Es liegt auf jeden Fall also ein isolierter Wandler vor.

Für die Anlaufphase der Steuereinheit G des ersten Moduls 1 kann in an sich bekannter Weise mit der AC-Versorgungsspannung 9 ein Anlaufwiderstand R1 gespeist werden, der die Steuereinheit G mit Energie versorgt, bis die primärseitige Niedervoltspannungsversorgung V_{CCP} erwartungsgemäß erzeugt wird, da die Erzeugung der primärseitigen und auch der sekundärseitigen Niedervoltspannungsversorgungen V_{CCP} und V_{CCS} eine Taktung des zweiten Untermoduls B (DC/DC-Wandler) voraussetzt. Wenn die eigentliche Niedervoltspannungsversorgung dann ausgehend von dem isolierten Wandler (zweiten Untermoduls B) angefahren ist, kann der ohmsche Anlaufwiderstand R1 wieder mit dem Schalter S3 abgeschaltet werden, um somit elektrische Verluste über den Anlaufwiderstand R1 im regulären Betrieb der Schaltung zu vermeiden.

Die Niedervoltspannungsversorgung V_{CCS} kann in dem zweiten Modul 2 einer Steuereinheit E zugeführt sein und/oder für die Versorgung eines dem zweiten Modul 2 zugeordneten aktives Kühlmittels 40 weitergeschleift sein.

Die sekundäre DC-Niedervoltspannungsversorgung V_{CCS} für das zweite Modul 2 kann zur Spannungsstabilisierung wie in der Figur 5 gezeigt nochmals eine Kühlmittelansteuerung 50, beispielsweise einen DC/DC-Konverter oder auch einen Linearregler zugeführt werden, wobei dann die stabilisierte Ausgangsspannung dieses DC/DC-Konverters oder Linearreglers die Steuereinheit E des zweiten Moduls 2 speist. Die Kühlmittelansteuerung 50 kann abhängig von einem über die Kommunikationsschnittstelle 6 zugeführten Dimmbefehl (Dimminformation), von einer Vorgabe durch die Steuereinheit E oder auch abhängig von der direkt (über einen Temperatursensor) oder indirekt (beispielsweise eine Temperaturermittlung der Temperatur der LED-Junction) ermittelten Temperatur am LED-Modul F die Ansteuerung des aktiven Kühlmittels 40 steuern oder auch regeln.

Somit können vorzugsweise aktive Kühlmittel 40 durch eine derartige Niedervoltversorgung über eine Kühlmittelansteuerung 50, welche jeweils auf dem zweiten Modul 2 angeordnet ist, versorgt werden. In diesem Fall werden derartige aktive Kühlmittel 40 wird also nicht direkt ausgehend von dem ersten Modul 1, sondern vorzugsweise individuell über jedes angeschlossene Lampenmanagementmodul 2 mit elektrischer Leistung versorgt. Dies bietet den Vorteil, dass bei einem Betrieb mehrerer zweiter Module 2, 2'... über ein erstes Modul 1 für jedes zweite Modul eine unabhängige Ansteuerung der aktiven Kühlmittel 40 möglich ist. Dies kann insbesondere vorteilhaft sein, wenn die Helligkeit der einzelnen LED-Module F unterschiedlich ist oder auch aufgrund der räumlichen Anordnung der einzelnen LED-Module F eine unterschiedlich starke Erwärmung der LED-Module F erfolgt.

Wie bereits erwähnt, kann die Niedervoltversorgung auch als Kommunikationsschnittstelle 6 dienen, d.h. es können zusätzlich zu der übertragenen Energie auch Daten übertragen werden.

### Speicherabgleich Kommunikation zwischen LMU und LED-Modul

Wie in Figur 1 dargestellt, kann das LED-Modul F in einem ihm zugeordneten Speicher 4, beispielsweise mit einem Eprom, FLASH oder OTP versehen sein.

Durch das Bezugszeichen 3 in Figur 1 schematisch dargestellt, kann die Steuereinheit E, beispielsweise eine integrierte Schaltung oder ein Mikrocontroller des zweiten Moduls 2 auf den Speicher 4 des LED-Moduls F zugreifen, um somit beispielsweise dessen Speicherinhalt selektiv auszulesen. Die von diesem Speicher 4 ausgelesenen Daten können dann beispielsweise auch von der Steuereinheit E des zweiten Moduls 2 über die Kommunikationsschnittstelle 6 (interner Bus) an das erste Modul 1 gesandt werden. Die Daten in dem Speicher 4 können beispielsweise die Laufzeit, Fertigungsdaten, eine Fehlerlogging, Maximalwert, Minimalwerte (z.B. für Strom und Spannung) und / oder die Temperatur sein.

Dies hat den Vorteil, dass eine etwaige Beeinträchtigung des Speicherinhalts des Speichers 4 des LED-Moduls F, beispielsweise durch die Temperaturbeeinträchtigung aufgrund der großen physischen Nähe zu der LED-Strecke 8, verringert wird. Somit kann die Steuereinheit E des zweiten Moduls 2 diese Daten auslesen und in einem ihm zugeordneten Speicher im Sinne eines Backups ablegen. Darüber hinaus kann die Steuereinheit E des zweiten Moduls 2 periodisch oder Betriebszustands- oder eventabhängig den Speicher 4 des LED-Moduls F auffrischen.

Es ist gemäß der Erfindung indessen auch möglich, dass das LED-Modul 8 selbst keinen Speicher aufweist. Die entsprechenden Daten, beispielsweise der zulässige Vorwärtsstrom für die LEDs der LED-Strecke 8 können in diesem Fall in den der integrierten Schaltung E des zweiten Moduls 2 (Lampenmanagementmodul) zugeordneten Speicher 51 geschrieben werden. Dies kann beispielsweise während der Herstellung des zweiten Moduls 2 (Lampenmanagementmodul) erfolgen.

Eine noch weitere Alternative oder zusätzliche Option ist es, dass das LED-Modul F mit einem Identifikations-Tag versehen ist, das beispielsweise die Betriebsdaten repräsentiert oder zumindest eine Identifikation für das LED-Modul F darstellt. Das Identifikations-Tag wird dann von der integrierten Schaltung E des zweiten Moduls 2 (Lampenmanagementmodul) ausgelesen und beispielsweise in einen der integrierten Schaltung E des zweiten Moduls 2 (Lampenmanagementmodul) zugeordneten Speicher abgelegt. Dieser somit nur einmal ausgelesene Dateninhalt des Identifikations-Tags kann dann für den weiteren Betrieb des LED-Moduls F verwendet werden.

Wie gesagt, es kann sich bei dem Identifikations-Tag auch nur um eine reine Identifikation handeln. Das zweite Modul 2 (Lampenmanagementmodul) würde in diesem Fall die Identifikationsdaten ermitteln und dann von dem LED-Modul F unabhängigen Speicher, beispielsweise auch einen über den externen Bus 10 zugreifbaren Datenbankinhalt, zugehörige Betriebsdaten ermitteln. Der Ansatz hat natürlich den Vorteil, dass somit die Kosten für den zusätzlichen Speicher 4, beispielsweise ein Eprom des LED-Moduls F eingespart werden können.

Die Möglichkeit des Auslesens des Speichers 4 des LED-Moduls F durch die Steuereinheit E ergibt den Vorteil, dass ganz verschiedene LED-Module F mit einem zweiten Modul 2 (Lampenmanagementmodul) kombiniert werden können, wobei die erforderlichen Betriebsdaten dabei aus dem LED-Modul F ausgelesen werden können und sich das zweite Modul 2 (Lampenmanagementmodul) somit flexibel an das angeschlossene LED-Modul F anpassen kann.

### Lichleistungskalibrierung

Vorzugsweise weist das LED-Modul F wie schematisch in Figur 6a, 6b bereits gezeigt, zwei, drei oder noch mehr voneinander unabhängig steuerbare Kanäle 53, 53', 53" auf. Jeder Kanal 53, 53', 53" kann eine LED-Strecke 8, 8', 8" mit einem oder mehrere LEDs aufweisen. Vorzugsweise sind natürlich die LEDs einer LED-Strecke 8, 8', 8" hinsichtlich ihres Spektrums nahezu identisch.

Ziel ist es, dass die unterschiedlichen LED-Kanäle 53, 53', 53" des LED-Moduls F im Farbraum einen Raum aufspannen, innerhalb dessen die gewünschten ansteuerbaren Farbkoordinaten liegen.

Bevorzugt ist dabei eine Ausgestaltung der zwei oder mehreren LED-Kanäle 53, 53', 53" des LED-Moduls F derart, dass der umspannte Raum zumindest große Bereiche der Planckschen Weißlichtkurve umfasst.

Eine beispielsweise Ausgestaltung könnte also sein:
- ein erster Kanal mit einer oder mehreren monochromatischen blauen LEDs,
- ein zweiter Kanal mit einer oder mehreren monochromatischen roten LEDs und
- ein dritter Kanal mit einer oder mehreren farbstoffkonvertierten LEDs, vorzugweise im grünlichweißen Spektrum.

Bei Vorliegen von drei unterschiedlichen LED-Kanälen wird also im Farbkoordinatensystem (CIE) ein Dreieck aufgespannt. Durch unterschiedliche individuelle Ansteuerung der Intensitäten der unterschiedlichen LED-Kanäle kann jeder Farbort innerhalb des dadurch gebildeten Dreiecks angesteuert werden.

Das obige Beispiel spannt im Farbraum ein Dreieck auf, das zumindest große Bereiche der Planckschen Weißlichtkurve abdeckt. Somit kann durch individuelle Ansteuerung der drei genannten LED-Kanäle im Wesentlichen jeder Punkt der Planckschen Weißlichtkurve angesteuert werden, d.h. es kann weißes Licht mit unterschiedlicher Farbtemperatur ausgesendet werden. Als Ergebnis einer Mischung des Lichts der mehreren LED-Kanäle.

Wie gesagt, um die unterschiedlichen Farborte insbesondere auf der Plank'schen Weißlichtkurve anzusteuern, müssen die unterschiedlichen LED-Kanäle mit unterschiedlicher Intensität (Strom) angesteuert werden.

Dies ist bei bekannter ermittelter oder vorab bekannter Effizienz der LEDs der LED-Kanäle rechnerisch möglich, d.h. ausgehend von einer X/Y-Koordinate des gewünschten Farborts kann unmittelbar die anzusteuernde Intensität der einzelnen Kanäle berechnet werden.

Ein Problem ist nunmehr, dass unterschiedliche LEDs unterschiedliche Wirkungsgrade (Lumen/LED-Strom) haben. Insbesondere ist die Kurve des Lichtoutputs (Lumen/LED-Strom) bzw. deren Steigung nicht für alle LEDs gleich. Wenn nunmehr unterschiedliche Farborte innerhalb des aufgespannten Dreiecks im Farbkoordinatensystem, insbesondere zum Abfahren der Planckschen Weißlichtkurve angesteuert werden, wird zwar das gewünschte Spektrum erreicht, es wird sich aber normalerweise der Gesamtlichtoutput verändern. Der Gesamtlichtoutput wird dabei tendenziell geringer werden, je höher der Anteil der Intensität von weniger effizienten LEDs ist.

Gemäß diesem Aspekt der Erfindung soll nunmehr auch bei einem Abfahren unterschiedlicher Farborte, insbesondere auf der Planckschen Weißlichtkurve, der Gesamtlichtoutput konstant bleiben.

Dazu wird vorab rechnerisch oder experimentell ermittelt, bei welchem Punkt innerhalb der abzufahrenden Farborte innerhalb des aufgespannten Farbdreiecks der minimale Lichtoutput vorliegt. In Kenntnis des minimalen Lichtoutputs können dann die Ansteuerintensitäten für alle anderen anzufahrenden Farborte kalibriert werden, d.h. es werden 'künstlich' die Intensitäten für jeden vom minimalen Lichtoutput abweichenden Farbort herunterskaliert, so dass letztendlich in dem aufgespannten Farbraum überall konstant Licht mit dem minimal erzielbaren Lichtoutput erzeugt wird.

Diese Kalibrierung auf den minimal erzielbaren Lichtoutput erfolgt also mittels eines Kalbrierungsfaktors, der gleichermaßen auf die Intensitäten sämtlicher LED-Kanäle angewandt wird.

Der Kalibrierungsfaktor kann dabei aufgrund der bekannten Wirkungsgrade der verwendeten LEDs berechnet werden.

Für den Fall, dass die Wirkungsgrade der unterschiedlichen LEDs der LED-Strecken 8, 8', 8" nicht bekannt sein sollten, kann beispielsweise mittels eines Photosensors der Gesamtlichtoutput beim Abfahren unterschiedlicher Farborte, insbesondere in der Art eines Scans der Planckschen Weißlichtkurve unter gleichzeitiger Messung des Gesamtlichtoutputs gemessen werden. Eine derartige Messung ermittelt also einerseits den minimalen Gesamtlichtoutput innerhalb der abzufahrenden Farborte sowie die Abhängigkeit des Gesamtlichtoutputs vom Farbort.

Beispielsweise kann der Kalibrierungsfaktor zur Verringerung der Intensitäten der einzelnen LED-Strecken im Sinne eines PWM-Dimmens (durch Änderung der Pulsweite der Ansteuerung) durchgeführt werden. Somit wird vorzugsweise das Kalibrieren durch eine Verringerung des Tastverhältnisses einer PWM-Ansteuerung erzeugt. Es kann dies aber auch durch eine Anpassung der Amplitude erfolgen (im Sinne eines Amplitudendimmens). Gerade wenn das Dimmen bzw. Einstellen der Intensität über eine Pulsweiten-Modulation (PWM) erfolgt, kann die Kalibrierung über einer Anpassung der Amplitude erfolgen.

Der genannte Intensitätsscan kann wiederholt ausgeführt werden, da nämlich die unterschiedlichen LEDs hinsichtlich ihres Wirkungsgrads (Intensität pro Strom) unterschiedliche Alterungserscheinungen aufweisen, die kompensiert werden müssen und zu unterschiedlichen Wirkungsgraden führen können. Insbesondere eine farbstoffkonvertierte LED wird einen höheren Grad an Alterung aufweisen als monochromatische LEDs.

Der genannte Intensitätsscan kann aber auch zur Überwachung der Alterung eingesetzt werden, wenn die Betriebsdaten der LED bekannt sind (beispielsweise in dem Speicher 4 des LED-Modul F abgelegt sind).

Derartige Alterungsparameter können indessen auch bereits herstellerseitig ermittelt und beispielsweise in dem Speicher 4 abgelegt werden, der dem LED-Modul F zugeordnet ist.

### Notlichtfunktion

Abschließend sollen nunmehr die Ausgestaltung und Funktion der erfindungsgemäßen Notlicht-Betriebsschaltung näher erläutert werden. Aufgabe dieser ist es, im Falle eines Ausfalls der AC-Versorgungsspannung den Betrieb der modularen LED-Beleuchtung weiterhin aufrecht zu erhalten. Das heißt, insbesondere das zweite Modul (Lampenmanagementmodul) soll mit Energie versorgt werden, um das LED-Modul F betreiben zu können. Wie später noch näher erläutert wird, kann dabei der Betrieb der Lampenanordnung in unveränderter Weise aufrecht erhalten werden. Denkbar wäre allerdings auch, im Notlichtbetrieb das LED-Modul F in ganz spezieller Weise zu betreiben. Eine erste Variante der Notlicht-Betriebsschaltung ist in Figur 1 gezeigt, wobei hier die Notlicht-Betriebsschaltung in das erste Modul 1 integriert ist. Eines der wesentlichen Elemente der Notlicht-Betriebsschaltung ist ein wiederaufladbarer Energiespeicher ES, der durch eine wiederaufladbare Batterie oder beispielsweise einen Kondensator, insbesondere einen sog. "Gold-Cap" gebildet sein kann. Dieser wiederaufladbare Energiespeicher ES soll im Normalbetrieb, also bei Anlegen der AC-Versorgungsspannung geladen werden, wozu die Notlicht-Betriebsschaltung eine Ladeschaltung 80 aufweist. Diese Ladeschaltung 80, die beispielsweise durch einen Flyback-Konverter gebildet ist, ist - wie schematisch in Fig. 1 dargestellt - mit den Eingang für die AC-Versorgungspannung gekoppelt. Sie ist als zusätzliche Wandlerschaltung isoliert im ersten Modul 1 ausgeführt und setzt die AC-Versorgungspannung in eine geeignete Gleichspannung um, über welche der Energiespeicher ES nachgeladen wird. Hierdurch ist sichergestellt, dass bei einem Ausfall der AC-Versorgungspannung der Energiespeicher ES einsatzbereit ist.

Wird nunmehr ein Ausfall der AC-Versorgungsspannung erkannt, so wird die Energie des Energiespeichers ES genutzt, um den Betrieb des LED-Moduls F aufrecht zu erhalten. Hierfür weist die Notlicht-Betriebsschaltung eine Entladeschaltung 81 auf, um die einzelnen Komponenten der LED-Beleuchtung im Notlichtfall aus dem Energiespeicher ES zu speisen. Die Entladeschaltung 81 wird durch einen Buck-Boost-Konverter gebildet. Sie kann ebenfalls Bestandteil des ersten Moduls 1 sein und zusätzlich zur Isoliereinheit B (im Weiteren auch als zweites Untermodul B bezeichnet) ausgebildet sein. Insbesondere ist sie an die Isoliereinheit B gekoppelt, wie dies in Fig. 1 schematisch dargestellt ist.

Die Energie des Energiespeichers ES wird dabei insbesondere dazu genutzt, im Notlichtfall über die DC-Versorgungsspannung 5 (Leistungsübertragung 5) das zweite Modul 2 (Lampenmanagementmodul) zu speisen. Ferner ist vorzugsweise vorgesehen, dass auch eine sekundärseitige Niedervoltspannungsversorgung V_{CCS} für das zweite Modul 2 (Lampenmanagementmodul) vorliegt. Das heißt, die integrierte Schaltung E des zweiten Moduls (Lampenmanagementmodul) ist weiterhin funktionsfähig und kann in der üblichen Weise die Ansteuerung des LED-Moduls F übernehmen.

Für den Fall, dass im Notlichtfall ausschließlich das zweite Modul 2 (Lampenmanagementmodul) mit Energie versorgt wird, ist vorzugsweise vorgesehen, dass bei einem Ausfall der AC-Versorgungsspannung die Notlicht-Betriebsschaltung das zweite Modul 2 (Lampenmanagementmodul) mit einem von der normalen DC-Ausgangspannung des ersten Moduls 1 abweichenden Spannungspegel versorgt. Diese Abweichung wird von dem zweiten Modul 2 (Lampenmanagementmodul) erkannt, welches daraufhin selbstständig den Betrieb des LED-Moduls F verändert. Beispielsweise könnte vorgesehen sein, dass - da nunmehr keine Steuersignale mehr von dem ersten Modul 1 erhalten werden - das zweite Modul (Lampenmanagementmodul) automatisch auf einen bestimmten vorgegebenen Notlichthelligkeitswert und/oder auf eine vorgegebene Notlichtfarbe umschaltet.

Alternativ hierzu könnte allerdings auch vorgesehen sein, dass die zuvor geschilderte Kommunikationsschnittstelle 6 zwischen dem ersten Modul 1 und dem zweiten Modul 2 (Lampenmanagementmodul) weiterhin aufrechterhalten wird. In diesem Fall stellt die Entladeschaltung 81 vorzugsweise auch eine Niedervoltspannungsversorgung für die Steuereinheit G des ersten Moduls 1 zur Verfügung. Beide Module, also das erste Modul 1 sowie das zweite Modul 2 (Lampenmanagementmodul), können dann in gewohnter Weise miteinander kommunizieren. Ferner könnte auch vorgesehen sein, dass nach wie vor über das erste Modul 1 eine externe Kommunikation ermöglicht wird. Das erste Modul 1 wäre dann beispielsweise in der Lage weiterhin externe Steuerbefehle zu empfangen und in geeigneter Weise umzusetzen. In diesem Fall könnte dann in gewohnter Weise ein Dimmen und eine Farbänderung von dem Notlichtbetrieb ermöglicht werden.

Alternativ kann das zweite Modul 2 (Lampenmanagementmodul) im Notlichtfall auch eine Kommunikation über die zusätzliche Schnittstelle (nicht dargestellt) durchführen. Beispielsweise könnte vorgesehen sein, dass - wenn nunmehr keine Steuersignale mehr von dem ersten Modul 1 erhalten werden - das zweite Modul 2 (Lampenmanagementmodul) über die zusätzliche Schnittstelle eine Anbindung an einen externen analogen oder digitalen Bus (auch drahtlos) durchführt und im Notlichtfall direkt mit diesem kommuniziert.

Eine zweite Variante der erfindungsgemäßen Notlicht-Betriebsschaltung ist in Fig. 2 angedeutet. Diese unterscheidet sich insbesondere im Hinblick auf die Art der Ankopplung der Ladeschaltung. Diese wird nunmehr über eine weitere Sekundärwicklung 83 an den Transformator 19 des ersten Moduls bzw. der Isoliereinheit B angekoppelt. Dem Energiespeicher ES ist dann ein Gleichrichter 84 vorgeschaltet. Die Speisung der einzelnen Komponenten der modularen LED-Beleuchtung im Notlichtfall ist identisch zu dem ersten Ausführungsbeispiel, weshalb in Fig. 2 die Entladeschaltung und deren Anbindung an die verschiedenen Komponenten nicht dargestellt ist. Grundsätzlich kann allerdings auch hier nur das zweite Modul 2 (Lampenmanagementmodul) oder zusätzlich auch das erste Modul 1 im Notlichtfall mit Energie versorgt werden.

### Liste der Bezugzeichen

- 1:: erstes Modul
- 2, 2':: zweites Modul
- 3:: Zugriff von E auf 4
- 4:: Speicher
- 5:: DC-Versorgungsspannung
- 6:: Kommunikationsschnittstelle
- 7:: Ausgang
- 8, 8', 8":: LED-Strecke
- 9:: AC-Versorgungsspannung
- 10:: externer Bus
- 11:: Datenschnittstelle
- 12:: Gehäuse
- 13:: Rückführgröße von 8
- 14:: Wechselrichter
- 15:: Resonanzkreis
- 16:: Induktivität
- 17:: Koppelkondensator
- 18:: Induktivität
- 19:: Transformator
- 20:: Primärwicklung
- 21:: Sekundärwicklung
- 22:: Gleichrichter
- 23:: Speicherkondensator
- 24:: Messwiderstand
- 29:: Mittenpunkt
- 30:: Sekundärwicklung
- 31:: Diode
- 32:: Kondensator
- 33:: Sekundärwicklung
- 40:: Kühlmittel
- 41:: Aktoren oder Sensoren
- 42:: Diode
- 43:: Kondensator
- 50:: Kühlmittelansteuerung
- 51:: Speicher
- 52:: Speicher, der mit der Steuereinheit G verbunden ist
- 53, 53', 53":: LED-Kanal

- 80:: Ladeschaltung
- 81:: Entladeschaltung
- 83:: Sekundärwicklung
- 84:: Gleichrichter

- A:: erstes Untermodul
- B:: zweites Untermodul
- C:: weiteres Untermodul
- D:: Schnittstellenschaltung
- E:: Steuereinheit
- F:: LED-Modul
- G:: Steuereinheit

- Lm:: Hauptinduktivität
- R1:: Anlaufwiderstand
- S1:: Schalter
- S2:: Schalter
- S3:: Schalter
- V_{Bus}:: Busspannung
- V_{CCP}:: primärseitige Niedervoltspannungsversorgung
- V_{CCs}:: sekundärseitige DC-Niedervoltspannungsversorgung

## Patentansprüche

1. Modulare LED-Beleuchtung, aufweisend ein erstes Modul (1), dem eine AC-Versorgungsspannung (9) zuführbar ist, und das aufweist:
- ein zweites Untermodul (B), an dessen Ausgang eine galvanisch von der AC-Versorgungsspannung (9) getrennte DC-Versorgungsspannung (5) bereitgestellt wird, und
- eine Steuereinheit (G), weiterhin aufweisend ein zweites Modul (2), das eine mit der DC-Versorgungsspannung (5) des ersten Moduls (1) versorgtes weiteres Untermodul (C), insbesondere eine getaktete Konstantstromquelle, aufweist, das von einer Steuereinheit (E) des zweiten Moduls (2) gesteuert wird,
- ein LED-Modul (F), das wenigstens eine LED-Strecke (8) aufweist und das von dem weiteren Untermodul (C), einer getakteten Konstantstromquelle, versorgt wird, und eine Notlichtbetriebsschaltung, die mit einem wiederaufladbaren Energiespeicher (ES) verbunden ist und bei Ausfall der AC-Versorgungsspannung (9) die Speisung der modularen LED-Beleuchtung übernimmt, **dadurch gekennzeichnet dass**, die Notlichtbetriebsschaltung eine Entladeschaltung (81) aufweist, welche einen Buck-Boost-Konverter aufweist und welche zur Speisung aus dem wiederaufladbaren Energiespeicher (ES) im Notlichtfall dient.

2. Modulare LED-Beleuchtung nach Anspruch 1,
wobei die Notlichtbetriebsschaltung eine Ladeschaltung (80) für den wiederaufladbaren Energiespeicher (ES) enthält, wobei dieser bei anliegender AC-Versorgungsspannung (9) nachgeladen wird,
und wobei die Ladeschaltung (80) vorzugsweise einen Flyback-Konverter aufweist.

3. Modulare LED-Beleuchtung nach Anspruch 2,
wobei die Ladeschaltung (80) an das zweite Untermodul (B) gekoppelt ist, vorzugsweise mittels einer zusätzlichen Sekundärwicklung (83).

4. Modulare LED-Beleuchtung nach Anspruch 2,
wobei die Ladeschaltung (80) als zusätzlich im ersten Modul (1) vorhandene Wandlerschaltung ausgeführt ist, die isoliert ausgeführt ist und von der AC-Versorgungsspannung (9) gespeist wird.

5. Modulare LED-Beleuchtung nach einem der vorhergehenden Ansprüche,
wobei die Notlichtbetriebsschaltung bei Ausfall der AC-Versorgungsspannung (9) die Speisung des zweiten Moduls (2) über die DC-Versorgungsspannung(5) und vorzugsweise auch die Speisung einer sekundärseitigen Niedervoltspannungsversorgung (V_{CCS}) für das zweite Modul (2) übernimmt.

6. Modulare LED-Beleuchtung nach einem der vorhergehenden Ansprüche,
wobei bei Ausfall der AC-Versorgungsspannung (9) eine externe Kommunikation (10) weiterhin aufrecht erhalten wird, beispielsweise entsprechend dem DALI-Standard.

7. Modulare LED-Beleuchtung nach einem der vorhergehenden Ansprüche,
wobei die Steuereinheit (G) des ersten Moduls (1) und die Steuereinheit (E) des zweiten Moduls (2) in interner Datenkommunikation über eine Kommunikationsschnittstelle (6) stehen und vorzugsweise die interne Datenkommunikation standardisiert ist, d.h. unabhängig von einer externen Bus-Kommunikation des ersten Moduls (1) ist.

8. Modulare LED-Beleuchtung nach Anspruch 7,
wobei bei Ausfall der AC-Versorgungsspannung (9) die interne Kommunikation zwischen dem ersten Modul (1) und dem zweiten Modul (2) weiterhin aufrecht erhalten wird.

9. Modulare LED-Beleuchtung nach einem der vorhergehenden Ansprüche,
wobei die Notlichtbetriebsschaltung das zweite Modul (2) bei Ausfall der AC-Versorgungsspannung (9) mit einem von der normalen DC-Versorgungsspannung (5) des ersten Moduls (1) abweichenden Spannungspegel versorgt, wobei das zweite Modul (2) diese Abweichung erkennt und den Betrieb des LED-Moduls (F) verändert.

10. Modulare LED-Beleuchtung nach Anspruch 9,
wobei das zweite Modul (2) auf einen Notlichthelligkeitswert und/oder auf eine Notlichtfarbe umschaltet, insbesondere wenn das zweite Modul (2) keine Steuersignale von dem ersten Modul (1) empfängt.

11. Modulare LED-Beleuchtung nach Anspruch 1,
wobei die Entladeschaltung (81) Bestandteil des ersten Moduls (1) und zusätzlich zum zweiten Untermodul (B) ausgebildet ist.

12. Modulare LED-Beleuchtung nach Anspruch 1,
wobei die Entladeschaltung (81) an das zweite Untermodul (B) gekoppelt ist.

13. Modulare LED-Beleuchtung nach einem der vorhergehenden
Ansprüche,
wobei der wiederaufladbarer Energiespeicher (ES) eine wiederaufladbare Batterie und/oder einen Kondensator wie beispielsweise einen 'Gold-Cap' aufweist.

14. Modulare LED-Beleuchtung nach einem der vorhergehenden
Ansprüche,
wobei ein Dimmen und eine Farbänderung auch bei Notlicht durchführbar ist.

## Claims

1. A modular LED lighting unit, comprising a first module (1), to which an AC supply voltage (9) can be supplied, and which has:
- a second sub-module (B), at the output of which a DC supply voltage is provided which is galvanically isolated from the AC supply voltage (9), and
- a control unit (G),
further comprising a second module (2) which comprises a further sub-module (C) supplied with the DC supply voltage (5) of the first module (1), in particular, has a pulsed constant current source, which is controlled by a control unit (E) of the second module (2),
- an LED module (F) which has at least one LED section (8) and is supplied by the further sub-module (C), a pulsed constant current source,
and an emergency light operating circuit, which is connected to a rechargeable energy storage (ES) and takes over the supply of the modular LED lighting unit in the event of failure of the AC supply voltage (9), **characterized in that**
the emergency light operating circuit has a discharge circuit (81), which has a buck-boost converter and which is used for the supply from the rechargeable energy storage (ES) in the event of an emergency lighting.

2. A modular LED lighting unit according to Claim 1,
wherein the emergency light operating circuit contains a charging circuit (80) for the rechargeable energy storage (ES), wherein this is recharged when the AC supply voltage (9) is applied,
and wherein the charging circuit (80) preferably comprises a flyback converter.

3. A modular LED lighting unit according to Claim 2,
wherein the charging circuit (80) is coupled to the second sub-module (B), preferably by means of an additional secondary winding (83).

4. A modular LED lighting unit according to claim 2,
wherein the charging circuit (80) is designed as a converter circuit present additionally in the first module (1), which is designed to be isolated and is supplied by the AC supply voltage (9).

5. A modular LED lighting unit according to any one of the preceding claims,
wherein the emergency light operating circuit in the event of the failure of the AC supply voltage (9) takes over the supply of the second module (2) via the DC supply voltage (5) and preferably also the supply of a low voltage power supply (Vccs) on the secondary side for the second module (2).

6. A modular LED lighting unit according to any one of the preceding claims,
wherein in the event of the failure of the AC supply voltage (9) an external communication (10) is still maintained, for example, according to the DALI standard.

7. A modular LED lighting unit according to any one of the preceding claims,
wherein the control unit (G) of the first module (1) and the control unit (E) of the second module (2) are in internal data communication via a communication interface (6) and preferably the internal data communication is standardized, i.e., is independent of an external bus-communication of the first module (1).

8. A modular LED lighting unit according to Claim 7,
wherein in the event of the failure of the AC supply voltage (9) the internal communication between the first module (1) and the second module (2) is still maintained.

9. A modular LED lighting unit according to any one of the preceding claims,
wherein the emergency light operating circuit supplies the second module (2) in the event of the failure of the AC supply voltage (9) with a voltage level deviating from the normal DC supply voltage (5) of the first module (1), wherein the second module (2) detects this deviation and alters the operation of the LED module (F).

10. A modular LED lighting unit according to Claim 9,
wherein the second module (2) switches to an emergency light brightness value and/or to an emergency light color, in particular if the second module (2) does not receive any control signals from the first module (1).

11. A modular LED lighting unit according to Claim 1,
wherein the discharging circuit (81) is a component of the first module (1) and is designed in addition to the second sub-module (B).

12. A modular LED lighting unit according to Claim 1,
wherein the discharging circuit (81) is coupled to the second sub-module (B).

13. A modular LED lighting unit according to any one of the preceding claims,
wherein the rechargeable energy storage (ES) has a rechargeable battery and/or a capacitor such as, for example, a 'gold-cap.'

14. A modular LED lighting unit according to any one of the preceding claims,
wherein a dimming and a color change can also be carried out in the case of emergency lighting.

## Revendications

1. Eclairage à DEL modulaire,
présentant un premier module (1) auquel peut être acheminée une tension d'alimentation CA (9) et qui présente :
- un deuxième sous-module (B) à la sortie duquel est fournie une tension d'alimentation CC (5) séparée galvaniquement de la tension d'alimentation CA (9), et
- une unité de commande (G),
présentant également un deuxième module (2) qui présente un autre sous-module (C) alimenté par la tension d'alimentation CC (5) du premier module (1), en particulier une source de courant constant cadencée, qui est commandé par une unité de commande (E) du deuxième module (2),
- un module à DEL (F) qui présente au moins un tronçon à DEL (8) et qui est alimenté par l'autre sous-module (C), une source de courant constant cadencée, et un circuit de fonctionnement d'éclairage de secours qui est connecté à un accumulateur d'énergie (ES) rechargeable et qui, en cas de panne de la tension d'alimentation CA (9), prend en charge l'alimentation de l'éclairage à DEL modulaire, **caractérisé en ce que** le circuit de fonctionnement d'éclairage de secours présente un circuit de décharge (81) qui présente un convertisseur Buck-Boost et qui sert à l'alimentation à partir de l'accumulateur d'énergie (ES) rechargeable en cas d'éclairage de secours.

2. Eclairage à DEL modulaire selon la revendication 1,
le circuit de fonctionnement d'éclairage de secours contenant un circuit de charge (80) pour l'accumulateur d'énergie (ES) rechargeable, celui-ci étant rechargé en présence de la tension d'alimentation CA (9),
et le circuit de charge (80) présentant de préférence un convertisseur indirect.

3. Eclairage à DEL modulaire selon la revendication 2,
le circuit de charge (80) étant couplé au deuxième sous-module (B), de préférence au moyen d'un enroulement secondaire (83) supplémentaire.

4. Eclairage à DEL modulaire selon la revendication 2, le circuit de charge (80) étant réalisé en tant que circuit de transformateur, présent à titre supplémentaire dans le premier module (1), qui est réalisé de façon isolée et qui est alimenté par la tension d'alimentation CA (9).

5. Eclairage à DEL modulaire selon l'une des revendications précédentes,
le circuit de fonctionnement d'éclairage de secours assurant, en cas de panne de la tension d'alimentation CA (9), l'alimentation du deuxième module (2) par le biais de la tension d'alimentation CC (5) et de préférence également l'approvisionnement avec une alimentation basse tension (Vccs) côté secondaire pour le deuxième module (2).

6. Eclairage à DEL modulaire selon l'une des revendications précédentes,
une communication externe (10) étant maintenue en cas de panne de la tension d'alimentation CA (9), par exemple conformément au standard DALI.

7. Eclairage à DEL modulaire selon l'une des revendications précédentes,
l'unité de commande (G) du premier module (1) et l'unité de commande (E) du deuxième module (2) étant en communication de données interne par le biais d'une interface de communication (6), et la communication de données interne étant de préférence normalisée, c'est-à-dire étant indépendante d'une communication de bus externe du premier module (1).

8. Eclairage à DEL modulaire selon la revendication 7, la communication interne entre le premier module (1) et le deuxième module (2) étant maintenue en cas de panne de la tension d'alimentation CA (9).

9. Eclairage à DEL modulaire selon l'une des revendications précédentes,
le circuit de fonctionnement d'éclairage de secours alimentant, en cas de panne de la tension d'alimentation CA (9), le deuxième module (2) avec un niveau de tension qui diverge de la tension d'alimentation CC (5) normale du premier module (1), le deuxième module (2) détectant cette divergence et modifiant le fonctionnement du module à DEL (F).

10. Eclairage à DEL modulaire selon la revendication 9, le deuxième module (2) étant commuté vers une valeur de luminosité d'éclairage de secours et/ou vers une couleur d'éclairage de secours, en particulier quand le deuxième module (2) ne reçoit pas de signaux de commande du premier module (1).

11. Eclairage à DEL modulaire selon la revendication 1, le circuit de décharge (81) faisant partie du premier module (1) et étant constitué en plus du deuxième sous-module (B).

12. Eclairage à DEL modulaire selon la revendication 1, le circuit de décharge (81) étant couplé au deuxième sous-module (B).

13. Eclairage à DEL modulaire selon l'une des revendications précédentes,
l'accumulateur d'énergie (ES) rechargeable présentant une batterie rechargeable et/ou un condensateur comme par exemple un « Gold-Cap ».

14. Eclairage à DEL modulaire selon l'une des revendications précédentes, une gradation et une modification de couleur pouvant être réalisées également en cas d'éclairage de secours.
